# EUROPÄISCHE PATENTSCHRIFT

(11) **EP 4 341 136 B1**
(45) Veröffentlichungstag und Bekanntmachung des Hinweises auf die Patenterteilung: **01.10.2025**
(21) Anmeldenummer: 22728086.4
(22) Anmeldetag: 05.05.2022
(51) Int. Cl.: B60T 13/66, B60T 8/88, B60T 13/68, B60T 17/22

(54) **ELEKTROPNEUMATISCHE BAUEINHEIT MIT INTEGRIERTER AUSFALLSICHERHEITSVENTILANORDNUNG FÜR MEHRFACHFEHLER, ELEKTRONISCH STEUERBARES PNEUMATISCHES BREMSSYSTEM, SOWIE VERFAHREN ZUM BETREIBEN EINES BREMSSYSTEMS**
ELECTROPNEUMATIC UNIT WITH INTEGRATED FAILSAFE VALVE ASSEMBLY FOR MULTIPLE FAULTS, ELECTRONICALLY CONTROLLABLE PNEUMATIC BRAKE SYSTEM, AND METHOD FOR OPERATING A BRAKE SYSTEM
UNITÉ STRUCTURALE ÉLECTROPNEUMATIQUE À ENSEMBLE SOUPAPE DE SÉCURITÉ INTÉGRÉ POUR DES DÉFAILLANCES MULTIPLES, SYSTÈME DE FREINAGE PNEUMATIQUE À COMMANDE ÉLECTRONIQUE, AINSI QUE PROCÉDÉ POUR FAIRE FONCTIONNER UN SYSTÈME DE FREINAGE

(30) Priorität: 18.05.2021 DE 102021112831
(43) Veröffentlichungstag der Anmeldung: 27.03.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/062094
(87) Internationale Veröffentlichungsnummer: WO 2022/243044

(56) Entgegenhaltungen:
- CN-A- 111 867 905
- US-A1- 2015 239 441

## Beschreibung

Die Erfindung betrifft eine elektropneumatische Baueinheit für ein elektronisch steuerbares pneumatisches Bremssystem für ein Fahrzeug, insbesondere ein Nutzfahrzeug, mit einem Vorratsanschluss zum Empfangen eines Vorratsdrucks von wenigstens einem ersten Druckluftvorrat und wenigstens einem ersten Redundanzbremsdruckanschluss zum Bereitstellen eines ersten Redundanzbremsdrucks für eine erste Achse des Fahrzeugs und/oder einen Anhänger des Fahrzeugs. Die Erfindung betrifft ferner ein elektronisch steuerbares pneumatisches Bremssystem für ein Fahrzeug, insbesondere ein Nutzfahrzeug, mit einer derartigen elektropneumatischen Baueinheit sowie ein Verfahren zum Betrieb eines elektronisch steuerbaren pneumatischen Bremssystems.

In elektronisch steuerbaren pneumatischen Bremssystemen, die in teilautonomen oder autonomen Fahrzeugen eingesetzt werden (insbesondere Automatisierungsgrade SAE-Level 2 bis 5) müssen für den Fall, dass ein Fehler vorliegt, Rückfallebenen eingezogen werden, um einen unsicheren Zustand des Fahrzeugs zu verhindern. Insbesondere bei höheren Automatisierungsgraden kann ein Fahrer nicht unmittelbar eingreifen oder ein Fahrer ist in dem Fahrzeug erst gar nicht vorhanden. Für diesen Fall muss sichergestellt werden, dass auch bei Auftreten von schweren Einfachfehlern oder Doppelfehlern ein unsicherer Zustand des Fahrzeugs vermieden werden kann und entweder ein Fail-operational-Zustand oder ein Fail-safe-Zustand erreicht werden kann.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Brems- und Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller umfasst, und eine Betriebsbremseinrichtung. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigstens einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung im Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne Weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachsbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart.

Aus DE 10 2019 106 274 A1 ist ferner ein elektronisch steuerbares Bremssystem mit zwei Rückfallebenen bekannt. Das elektronisch steuerbare Bremssystem der dort offenbarten Ausführung umfasst ein Betriebsbremssystem mit einem Vorderachsbremskreis, der einen Vorderachsmodulator aufweist, sowie einen Hinterachsbremskreis und einem zentralen Steuermodul. Das zentrale Steuermodul agiert in diesem Fall gleichzeitig als Hinterachsmodulator und steuert unmittelbar Hinterachsbremsdrücke an wenigstens einer Hinterachse des Nutzfahrzeugs aus. Das zentrale Steuermodul stellt auch Signale an dem Vorderachsmodulator bereit, um diesen zu veranlassen, entsprechende Vorderachsbetriebsbremsdrücke an der Vorderachse auszusteuern. Das Bremssystem umfasst auch einen Feststellbremskreis mit einem Feststellbremsmodul, das dazu ausgebildet ist, für den Fall eines Defekts in dem zentralen Steuermodul eine Bremsvorgabe zu verarbeiten und einen Hinterachs-Redundanzbremsdruck an Federspeicherteilen an der Hinterachse auszusteuern zum redundanten Umsetzen der Bremsvorgabe. Die Vorderachse wird in dieser ersten Redundanzebene über einen Redundanzbremsdruck pneumatisch angesteuert, der von dem Feststellbremsmodul ausgesteuert wird. Dieser pneumatische Steuerdruck wird dann an dem Vorderachsmodulator umgesetzt, um so eine Aussteuerung von Vorderachsbremsdrücken an der Vorderachse zu erlauben. Der Redundanzdruck wird in einen Druckpfad eingespeist, in den auch ein pneumatischer Bremswertgeber (Fußbremspedal) pneumatischen Bremsdruck einspeisen kann. Für den Fall, dass nun auch das Feststellbremsmodul einen Defekt hat, wird als zweite Rückfallebene definiert, dass der Vorderachsmodulator die Bremsvorgabe umsetzen kann und entsprechend einen Redundanzdruck an dem Feststellbremsmodul bereitstellt, um so eine pneumatische Umsetzung des Redundanzdrucks an der Hinterachse zu ermöglichen. Das hier offenbarte Bremssystem hat also eine Betriebsebene sowie eine erste und zweite Rückfallebene. Auf diese Weise soll ein Fail-operational-Betrieb ermöglicht werden.

Ein anderes System ist aus DE 10 2019 106 591 A1 bekannt. Auch das dort offenbarte System hat zwei Rückfallebenen. Das dort offenbarte Bremssystem umfasst eine weitergehende Aufdoppelung der Elemente und hat insbesondere neben einem Vorderachsmodulator auch einen Redundanz-Vorderachsmodulator, der in der Rückfallebene aktiv ist, sowie einen Redundanz-Hinterachsmodulator, der in der Rückfallebene aktiv ist. Diese werden von einem Redundanzbrems-Steuermodul gesteuert, das das Betriebsbrems-Steuermodul teilweise oder vollständig ersetzen kann. Eine weitere Rückfallebene kann dann wiederum über die Parkbremse erreicht werden. Ein solches System ermöglicht einen weitgehenden Fail-operational-Betrieb, nutzt allerdings eine Vielzahl von Bauteilen und hat daher einen erhöhten Montage- und Platzbedarf.

Andere elektropneumatische Baueinheiten sind aus CN111867905A, US2015/239441A1 bekannt.

Neben solchen Systemen mit zwei funktionellen Rückfallebenen, die sowohl in einer ersten als auch in einer zweiten Rückfallebene einen Fail-operational-Betrieb zulassen, besteht auch Bedarf an Systemen, die neben einer ersten Rückfallebene in einer zweiten (oder weiteren) Rückfallebene nur einen Fail-safe-Betrieb zulassen und so ein ungebremstes Ausrollen in einem Doppelfehlerfall, in dem sowohl ein Betriebsbremssystem als auch ein Redundanzbremssystem nicht oder nicht richtig funktioniert, ermöglicht.

Eine Aufgabe der vorliegenden Erfindung ist es also, eine elektropneumatische Baueinheit der eingangs genannten Art bereitzustellen, die kosten- und bauraumoptimiert auch dann noch ein sicheres Bremsen und Stoppen des Fahrzeugs ermöglicht, wenn redundante Systeme, Teilsysteme oder Ebenen des Bremssystems ausgefallen sind. Wird beispielsweise ein Bremssystem über mehrere Spannungsquellen versorgt, kann es im schlimmsten Fall dazu kommen, dass sämtliche Spannungsquellen versagen. Auch in diesem Fall soll auf einfache Art und Weise sichergestellt werden, dass das Fahrzeug sicher verzögert werden kann.

Die Erfindung löst die Aufgabe bei einer elektropneumatischen Baueinheit der eingangs genannten Art dadurch, dass die Baueinheit einen Ausfallversorgungsanschluss zum Empfangen eines Ausfallversorgungsdrucks, der gegenüber dem Vorratsdruck begrenzt und geringer als dieser ist, sowie durch eine mit dem Ausfallversorgungsanschluss und dem Redundanzbremsdruckanschluss oder wenigstens einem ersten Redundanzsteueranschluss verbundene Ausfallsicherheitsventilanordnung aufweist, die wenigstens ein als monostabiles Ventil ausgebildetes erstes Ausfallbremsventil aufweist, welches in einem Fehlerfall schaltbar ist, um basierend auf dem Ausfallversorgungsdruck den ersten Redundanzbremsdruck an dem ersten Redundanzbremsdruckanschluss oder wenigstens einen ersten Redundanzsteuerdruck an dem ersten Redundanzsteueranschluss auszusteuern. Der Erfindung liegt die Erkenntnis zugrunde, dass ein sicheres Bremsen und Stoppen des Fahrzeugs dadurch erreicht werden kann, dass ein Ausfallversorgungsdruck, der gegenüber dem Vorratsdruck begrenzt und geringer als dieser ist, benutzt werden kann, um unmittelbar oder mittelbar einen Redundanzbremsdruck an dem ersten Redundanzbremsdruckanschluss auszusteuern. An dem Ausfallversorgungsanschluss liegt also ein permanenter Druck an, insbesondere ein Druck, der bei einem fahrenden Fahrzeug bzw. in einem fahrenden Fahrzeugzustand verfügbar ist. Der Ausfallversorgungsdruck kann vorzugsweise aus dem ersten Druckluftvorrat, einem weiteren Druckluftvorrat des elektronisch steuerbaren pneumatischen Bremssystems oder aus einem an einer oder mehreren Achsen vorhandenen Federspeicherbremszylinder stammen.

Die Ausfallsicherheitsventilanordnung kann einerseits unmittelbar mit dem Redundanzanschluss verbunden sein gegebenenfalls unter Zwischenschaltung eines oder mehrerer Ventile, sodass der von der Ausfallsicherheitsventilanordnung ausgesteuerte Druck als erster Redundanzbremsdruck an dem ersten Redundanzbremsdruckanschluss bereitgestellt wird. Alternativ kann die Ausfallsicherheitsventilanordnung aber auch nur einen ersten Redundanzsteuerdruck bereitstellen, der dann an einem weiteren vorzugsweise volumenverstärkenden Ventil wie beispielsweise einem Relaisventil oder pneumatisch schaltbaren Ventil ausgesteuert wird. In diesem Fall bewirkt der erste Redundanzsteuerdruck dann die Aussteuerung des ersten Redundanzbremsdrucks durch das weitere Ventil, wie beispielsweise das Relaisventil.

In einer Ausführungsform kann aber auch die Ausfallsicherheitsventilanordnung ein solches volumenverstärkendes Ventil, vorzugsweise Relaisventil, umfassen.

Die elektropneumatische Baueinheit kann ein elektropneumatisches Modul des elektronisch steuerbaren pneumatischen Bremssystems sein, das ohnehin vorhanden ist, wie beispielsweise ein Zentralmodul der Betriebsebene und/oder der Redundanzebene, ein Vorder- und/oder Hinterachsmodulator, ein Parkbremsmodulator oder ein Anhängersteuerventil. Die elektropneumatische Baueinheit kann aber auch ein Teil eines solchen Modulators sein oder teilweise oder vollständig mit diesem integriert sein. In diesem Fall kann es ausreichen, ein vorhandenes elektropneumatisches Modul mit einem Ausfallversorgungsanschluss und einer Ausfallsicherheitsventilanordnung zu versehen, um die elektropneumatische Baueinheit gemäß der vorliegenden Erfindung zu realisieren. Über den Vorratsanschluss wird die elektropneumatische Baueinheit mit Vorratsdruck versorgt, um im Betriebsfall und/oder einer ersten Rückfallebene Drücke auszusteuern. Der Ausfallversorgungsdruck, der am Ausfallversorgungsanschluss bereitgestellt wird, wird dann vorzugsweise erst in einer zweiten oder weiteren Rückfallebene verwendet, um in dieser Rückfallebene dann den Redundanzbremsdruck an dem ersten Redundanzbremsdruckanschluss auszusteuern und so das Fahrzeug zu bremsen. Es kann vorgesehen sein, dass an dem Redundanzbremsdruckanschluss in der ersten Rückfallebene des elektronisch steuerbaren pneumatischen Bremssystems ein Redundanzdruck ausgesteuert wird, der unter Verwendung des vom Vorratsanschluss empfangenen Vorratsdrucks ausgesteuert wird.

In einer bevorzugten Weiterbildung ist vorgesehen, dass das erste Ausfallbremsventil ein 3/2-Wege-Ventil ist mit einem den Ausfallversorgungsdruck empfangenden ersten Ausfallbremsventilanschluss, einem den ersten Redundanzbremsdruck oder einen zugeordneten Redundanzsteuerdruck aussteuernden zweiten Ausfallbremsventilanschluss und einem mit einer Entlüftung verbundenen dritten Ausfallbremsventilanschluss, wobei in einer nicht aktivierten Schaltstellung der erste Ausfallbremsventilanschluss mit dem zweiten Ausfallbremsventilanschluss verbunden ist und in einer aktivierten Schaltstellung der zweite Ausfallbremsventilanschluss mit dem dritten Ausfallbremsventilanschluss verbunden ist. Der erste Ausfallbremsventilanschluss kann mit dem Ausfallversorgungsanschluss verbunden sein, oder zwischen diesem und dem Ausfallversorgungsanschluss sind noch ein oder mehrere weitere Ventile angeordnet. Der zweite Ausfallbremsventilanschluss ist vorzugsweise unmittelbar oder mittelbar mit dem ersten Redundanzbremsdruckanschluss verbunden. Der von dem zweiten Ausfallbremsventilanschluss ausgesteuerte Druck kann unmittelbar als Redundanzbremsdruck oder zunächst als Redundanzsteuerdruck bereitgestellt werden, der dann von einer weiteren Ventileinheit volumenverstärkt und am Redundanzbremsdruckanschluss ausgesteuert wird. Der dritte Ausfallbremsventilanschluss ist mit einer Entlüftung verbunden, die insbesondere eine zentrale Entlüftung der elektropneumatischen Baueinheit bzw. des elektropneumatischen Moduls ist, von dem die elektropneumatische Baueinheit ein Teil ist. Solange das erste Ausfallbremsventil bestromt wird, ist der zweite Ausfallbremsventilanschluss mit dem dritten Ausfallbremsventilanschluss verbunden, sodass der zweite Ausfallbremsventilanschluss stets entlüftet ist und somit kein Druck an diesem ausgesteuert wird. Erst wenn das erste Ausfallbremsventil in einen nicht aktivierten Zustand geschaltet wird, weil es nicht mehr bestromt wird, beispielsweise weil ein Fehler in einer dieses ansteuernden Steuereinheit aufgetreten ist, wird der erste Ausfallbremsventilanschluss mit dem zweiten Ausfallbremsventilanschluss verbunden, sodass der Ausfallversorgungsdruck durchgesteuert werden kann und als Redundanzdruck oder Redundanzsteuerdruck ausgesteuert wird.

Vorzugsweise ist vorgesehen, dass dem Ausfallversorgungsanschluss ein Druckbegrenzer vorgeschaltet ist oder die elektropneumatische Baueinheit einen Druckbegrenzer zum Begrenzen des am Ausfallversorgungsanschluss empfangenen Drucks aufweist. Der Ausfallversorgungsdruck soll begrenzt und geringer sein als der Vorratsdruck. Beispielsweise kann der Vorratsdruck in typischen Bremssystemen zwischen 8 bar und 12 bar betragen. Der Ausfallversorgungsdruck ist vorzugsweise begrenzt auf einen Bereich zwischen etwa 2 bar und 8 bar. Die genaue Begrenzung des Ausfallversorgungsdrucks kann abhängig sein von bestimmten erlaubten Reibwerten, beispielsweise dem Fahrzeuggewicht, der Art der Bremsaktuatoren oder dem Beladungszustand des Fahrzeugs. Auch die Achslast kann eine Rolle spielen. Da der Ausfallversorgungsdruck unmittelbar zur Aussteuerung des Redundanzbremsdrucks verwendet wird, sollte dieser so begrenzt sein, dass ein unmittelbares Blockieren von einer oder mehreren Achsen des Fahrzeugs verhindert ist. Dennoch sollte dieser ausreichend hoch sein, dass eine sichere Bremsung ermöglicht ist. Beispielsweise ist es denkbar, dass bei einer geringen Fahrzeuggeschwindigkeit ein höherer Ausfallversorgungsdruck erlaubt ist, da bei geringen Geschwindigkeiten ein Blockieren von einer oder mehreren Achsen nicht unmittelbar zu einer Fahrzeuginstabilität führt. Bei einer höheren Geschwindigkeit könnte der Ausfallversorgungsdruck dahingegen weiter begrenzt sein, um das Blockieren von einer oder mehreren Achsen sicher zu verhindern. Der Druckbegrenzer dient genau diesem Zweck. Ein Druckbegrenzer kann aber auch entfallen, wenn die Quelle, aus der der Ausfallversorgungsdruck stammt, bereits druckbegrenzt ist. Wird beispielsweise der Ausfallversorgungsdruck aus einem Federspeicherbremszylinder bereitgestellt, kann der Druck bereits begrenzt sein. Dies ist beispielsweise dann der Fall, wenn ein Druck eines Federspeicherbremszylinders auf etwa 8 bar begrenzt ist, der Vorratsdruck des Bremssystems aber bei 12 bar liegt. In diesem Fall kann es vorteilhaft sein, einen zusätzlichen Druckbegrenzer nicht vorzusehen.

Bei der Integration des Druckbegrenzers in die elektropneumatische Baueinheit ist vorteilhaft, dass Montageaufwand reduziert sein kann. Es kann aber auch vorteilhaft sein, den Druckbegrenzer in räumlicher Nähe zu der Druckquelle, aus der der Ausfallversorgungsdruck bereitgestellt wird, vorzusehen. Auf diese Weise kann die Verrohrung einfacher ausfallen.

In einer bevorzugten Weiterbildung ist vorgesehen, dass die Ausfallsicherheitsventilanordnung ein elektromagnetisches Bistabilventil aufweist, welches mit dem ersten Ausfallbremsventil pneumatisch in Reihe geschaltet ist. Ein derartiges Bistabilventil ist ein elektromagnetisches Magnetventil mit wenigstens einem ersten Permanentmagneten. Der Permanentmagnet hält das Bistabilventil auch im stromlosen Zustand in einer Raststellung. Vorzugsweise weist das Bistabilventil ferner eine erste Spule auf. Durch Bestromen der ersten Spule kann ein Anker des Bistabilventils, der vorzugsweise den Permanentmagneten trägt, in die erste Raststellung gebracht werden. Durch gegenteiliges Bestromen der ersten Spule kann der Anker des Bistabilventils dann in eine zweite magnetische Raststellung gebracht werden. Vorzugsweise weist das Bistabilventil ferner einen zweiten Permanentmagneten und/oder eine zweite Spule auf, die besonders bevorzugt analog zum ersten Permanentmagneten und/oder zur ersten Spule ausgebildet sind. So kann das Bistabilventil vorzugsweise in zwei Raststellungen magnetisch verrasten. Wenn dann keine andere Kraft auf den Anker wirkt oder dieser in der Raststellung mechanisch und/oder magnetisch verrastbar ist, ist die jeweilige Schaltstellung stabil, da sie ohne weiteres Bestromen der ersten und/oder zweiten Spule aufrechterhalten bleiben kann.

Das Bistabilventil weist vorzugsweise einen den Ausfallversorgungsdruck empfangenden Bistabilventilanschluss, einen mit dem Ausfallbremsventil verbunden zweiten Bistabilventilanschluss und einen mit einer Entlüftung verbundenen dritten Bistabilventilanschluss auf. Das Bistabilventil ist vorzugsweise so mit dem ersten Ausfallbremsventil in Reihe geschaltet, dass in einer ersten Schaltstellung des Bistabilventils eine Aussteuerung des Redundanzdrucks bzw. des Redundanzsteuerdrucks durch das erste Ausfallbremsventil ermöglicht ist, und in einer zweiten Schaltstellung des Bistabilventils eine Aussteuerung des Redundanzdrucks bzw. Redundanzsteuerdrucks durch das erste Ausfallbremsventil unabhängig von seiner Schaltstellung nicht möglich ist. **In** dieser zweiten Schaltstellung des Bistabilventils verbindet das Bistabilventil vorzugsweise wenigstens einen Anschluss mit einer Entlüftung. **In** dieser zweiten Schaltstellung kann das Bistabilventil sein, wenn sich das Fahrzeug in einem manuellen Betrieb befindet. Befindet sich das Fahrzeug in einem manuellen Betrieb, in dem ein Fahrzeugführer mit einem Fußbremsventil einen Bremsdruck vorgeben kann, ist eine Rückfallebene, wie sie hier beschrieben ist, mit der Aussteuerung des Ausfallversorgungsdrucks nicht wünschenswert. Der Fahrzeugführer kann stets eingreifen und das Fahrzeug rein pneumatisch bis zum Stillstand bremsen. Befindet sich das Fahrzeug allerdings in einem automatisierten oder teilautomatisierten Betrieb, ist es bevorzugt, das Bistabilventil in die erste Schaltstellung zu schalten, sodass abhängig von der Schaltstellung des ersten Ausfallbremsventils basierend auf dem empfangenen Ausfallversorgungsdruck der Redundanzdruck bzw. Redundanzsteuerdruck ausgesteuert werden kann. In diesem Fall wird dann das Fahrzeug bei Vorliegen eines schweren Einfachfehlers oder Doppelfehlers unmittelbar gebremst und in den sicheren Stillstand geführt.

Bevorzugt weist die elektropneumatische Baueinheit eine Arbeitsventilanordnung auf, die mit dem Vorratsanschluss verbunden ist und von diesem Vorratsdruck empfängt und schaltbar ist, um an dem ersten Redundanzbremsdruckanschluss den ersten Redundanzbremsdruck auszusteuern oder an einem Arbeitsanschluss der elektropneumatischen Baueinheit einen Arbeitsdruck auszusteuern, sowie eine elektronische Steuereinheit zum Ansteuern der Arbeitsventilanordnung. Die elektronische Steuereinheit ist Teil der elektropneumatischen Baueinheit und mit dieser vorzugsweise als Modul ausgebildet. Die Arbeitsventilanordnung kann eine beliebige Arbeitsventilanordnung sein, wie sie in elektropneumatischen Modulen in elektropneumatischen Bremssystemen verwendet wird. Beispielsweise kann die Arbeitsventilanordnung nach einem Achsmodulator gebildet sein. Steuert die Arbeitsventilanordnung den ersten Redundanzbremsdruck an dem ersten Redundanzbremsdruckanschluss aus, kann die elektropneumatische Baueinheit als redundanter Modulator bezeichnet werden und beispielsweise als redundanter Vorderachsmodulator, redundanter Hinterachsmodulator oder als redundantes Modul zur Bereitstellung von Redundanzbremsdrücken für eine Vorder- und/oder Hinterachse und/oder Anhängersteuerventil und/oder Parkbremseinheit vorgesehen sein. Die Arbeitsventilanordnung kann aber auch an einem dafür vorgesehenen Arbeitsanschluss der elektropneumatischen Baueinheit einen Arbeitsdruck aussteuern. Beispielsweise kann die Arbeitsventilanordnung auch eine Ventilanordnung zur Betätigung einer Parkbremse sein. In diesem Fall könnte der Arbeitsanschluss dann mit einem Federspeicherbremszylinder einer Parkbremsanordnung verbunden sein, um diesen für den Fahrbetrieb des Fahrzeugs zu belüften.

Die elektronische Steuereinheit der elektropneumatischen Baueinheit ist vorzugsweise über einen Fahrzeug-BUS oder eine andere elektrische Verkabelung mit vorzugsweise einem Zentralmodul des elektronisch steuerbaren pneumatischen Bremssystems und/oder mit einer Einheit für autonomes Fahren verbunden. Sie kann auch zusätzlich oder alternativ mit einer elektronischen Lenkeinrichtung oder anderen Systemen des Fahrzeugs verbunden sein, die Bremsanforderungssignale bereitstellen können.

In einer bevorzugten Weiterbildung ist vorgesehen, dass die elektronische Steuereinheit das erste Ausfallbremsventil ansteuert. Dies ist insbesondere dann bevorzugt, wenn die elektronische Steuereinheit gleichzeitig eine erste oder andere vorgelagerte Rückfallebene des elektronisch steuerbaren pneumatischen Bremssystems steuert. Bildet beispielsweise die elektropneumatische Baueinheit einen Redundanzmodulator oder eine Redundanzeinheit, die für den Fall, dass ein Betriebsbremssystem vollständig oder teilweise ausfällt, den Betrieb des elektronisch steuerbaren pneumatischen Bremssystems übernimmt, ist bevorzugt, dass für den Fall, dass diese elektronische Steuereinheit ausfällt, das erste Ausfallbremsventil stromlos geschaltet wird und somit den Ausfallversorgungsdruck empfängt und basierend auf diesem den Redundanzdruck bzw. Redundanzsteuerdruck aussteuert. Bevorzugt kann auch vorgesehen sein, dass die elektronische Steuereinheit das Bistabilventil ansteuert. Das Bistabilventil kann aber auch von jeder anderen elektronischen Steuereinheit angesteuert werden, die Informationen darüber hat, ob das Fahrzeug im autonomen oder manuellen Betrieb ist.

Gemäß einer weiteren bevorzugen Weiterbildung ist vorgesehen, dass die Ausfallsicherheitsventilanordnung ein als monostabiles Ventil ausgebildetes zweites Ausfallbremsventil aufweist, welches mit dem ersten Ausfallbremsventil pneumatisch in Reihe geschaltet ist. Die Reihenfolge zwischen erstem Ausfallbremsventil, zweitem Ausfallbremsventil und Bistabilventil ist funktional ohne Bedeutung und kann beliebig gewählt werden, um einen möglichst einfachen Aufbau zu wählen.

Das zweite Ausfallbremsventil wird vorzugsweise von einer weiteren elektronischen Steuereinheit angesteuert. Die weitere elektronische Steuereinheit ist verschieden von der elektronischen Steuereinheit, die das erste Ausfallbremsventil ansteuert und/oder von der elektronischen Steuereinheit, die das Bistabilventil ansteuert und/oder von der elektronischen Steuereinheit, die die Arbeitsventilanordnung ansteuert. Die weitere elektronische Steuereinheit wird vorzugsweise von einer weiteren Spannungsquelle versorgt, die unabhängig von der Spannungsquelle ist, die die elektronische Steuereinheit versorgt. Auf diese Weise kann eine weitere Sicherheitsebene eingezogen werden. Jeweils eines der Ausfallbremsventile ist einer Steuereinheit zugeordnet, nämlich das erste Ausfallbremsventil der elektronischen Steuereinheit und das zweite Ausfallbremsventil der weiteren elektronischen Steuereinheit. Das erste und das zweite Ausfallbremsventil werden also jeweils von unterschiedlichen, voneinander unabhängigen elektronischen Steuereinheiten im angesteuerten Zustand durch ein Steuersignal in einem Sperrzustand gehalten bzw. in einem Zustand, in dem kein Redundanzbremsdruck ausgesteuert werden kann. Vorzugsweise können die elektronische Steuereinheit und die weitere elektronische Steuereinheit wenigstens teilweise gegenseitig ihre Funktionen ersetzen. Dies bedeutet, dass die weitere elektronische Steuereinheit im Sinne einer Rückfallebene in redundanter Weise Funktionen der elektronischen Steuereinheit bereitstellen kann oder umgekehrt, falls die erste von beiden ausfallen sollte. Im Falle eines Mehrfachfehlers, das heißt eines Fehlers, der mehrere Steuereinheiten betrifft und insbesondere die elektronische Steuereinheit sowie die weitere elektronische Steuereinheit betrifft, werden sowohl das erste Ausfallbremsventil als auch das zweite Ausfallbremsventil stromlos geschaltet, sodass in der Folge durch diese der Ausfallversorgungsdruck durchgesteuert werden kann, vorausgesetzt, ein etwaig vorhandenes Bistabilventil gibt diesen Weg ebenfalls frei. Der Ausfallversorgungsdruck kann dann vermittels der ersten und zweiten Ausfallbremsventile als Redundanzdruck bzw. Redundanzsteuerdruck bereitgestellt werden, um in der Folge eine Bremsung des Fahrzeugs zu veranlassen. Fallen also sowohl die elektronische Steuereinheit als auch die weitere elektronische Steuereinheit aus und wird aufgrund dessen ein entsprechendes Ansteuersignal an den ersten und zweiten Ausfallbremsventilen nicht oder nicht richtig bereitgestellt, schalten diese jeweils in ihren stabilen Zustand und in der Folge wird der Redundanzdruck bzw. der Redundanzsteuerdruck ausgesteuert, sodass das Fahrzeug in der Folge gebremst werden kann. Diesem Aspekt liegt die Erkenntnis zugrunde, dass bei mehreren Subsystemen eines Bremssystems mit jeweils unabhängigen elektronischen Steuereinheiten sich ein Fehler vorteilhaft durch das Ausbleiben eines Steuersignals für das jeweilige der elektronischen Steuereinheit zugeordnete Ausfallbremsventil äußern kann. Dies kann beispielsweise bei einem Stromausfall der Fall sein, das heißt, wenn die Stromversorgung für die elektronische Steuereinheit ausgefallen ist. Auch kann die elektronische Steuereinheit derart ausgebildet sein, dass im Falle eines Ausnahmefehlers, insbesondere einem Fall, in dem die Steuerlogik die Sicherheit des Fahrzeugs nicht mehr gewährleisten kann, ein Nullsignal als Steuersignal für das Ausfallbremsventil ausgegeben wird und somit ein Nichtvorhandensein des Steuersignals simuliert wird. Wenn dies der Fall ist, wenn also an beiden Subsystemen ein Fehler, insbesondere in Form eines Ausnahmefehlers oder Stromausfalls, vorliegt, gewährleistet die Ausfallsicherheitsventilanordnung gemäß diesem Ausführungsbeispiel durch das Bereitstellen des Redundanzdrucks bzw. Redundanzsteuerdrucks ein sicheres Verzögern des Fahrzeugs.

Neben dem zweiten Ausfallbremsventil können auch dritte und weitere Ausfallbremsventile dieser Art in Reihe geschaltet sein. Die beschriebenen Vorteile und Ausführungsformen gelten dann ebenso.

Bevorzugt weist die Arbeitsventilanordnung wenigstens eine erste elektromagnetische Vorsteuereinheit und eine erste Hauptventileinheit auf, wobei die erste Vorsteuereinheit mit dem Vorratsanschluss verbunden ist und in Abhängigkeit von ersten Schaltsignalen der elektronischen Steuereinheit einen ersten Arbeitssteuerdruck an der ersten Hauptventileinheit aussteuert, wobei die erste Hauptventileinheit mit dem Vorratsanschluss verbunden ist und in Abhängigkeit von dem empfangenen ersten Arbeitssteuerdruck einen ersten Arbeitsbremsdruck aussteuert. Die Vorsteuereinheit kann in grundsätzlich bekannter Weise Einlass- und Auslassventile aufweisen, die jeweils als 2/2-Wege-Ventil ausgebildet sein können. Die Vorsteuereinheit kann auch als Einlass-Auslass-Ventileinheit ein 3/2-Wege-Ventil oder andere Kombinationen von 2/2-Wege- und 3/2-Wege-Ventilen aufweisen. Die Hauptventileinheit kann in bekannter Weise ein Relaisventil oder ein pneumatisch schaltbares Hauptventil oder andere Ventilkombinationen umfassen. Die elektromagnetische Vorsteuereinheit stellt den ersten Arbeitssteuerdruck bereit, den die erste Hauptventileinheit volumenverstärkt und dann volumenverstärkt als Arbeitsbremsdruck aussteuert.

In einer bevorzugten Weiterbildung weist die Arbeitsventilanordnung eine zweite elektromagnetische Vorsteuereinheit und eine zweite Hauptventileinheit auf, wobei die zweite Vorsteuereinheit mit dem Vorratsanschluss verbunden ist und in Abhängigkeit von zweiten Schaltsignalen der elektronischen Steuereinheit einen zweiten Arbeitssteuerdruck an der zweiten Hauptventileinheit aussteuert, wobei die zweite Hauptventileinheit mit dem Vorratsanschluss verbunden ist und in Abhängigkeit von dem empfangenen zweiten Arbeitssteuerdruck einen zweiten Arbeitsbremsdruck aussteuert. Die elektropneumatische Baueinheit gemäß diesem Ausführungsbeispiel kann als sogenannter Zweikanalmodulator bezeichnet werden, da die elektropneumatische Baueinheit gemäß diesem Ausführungsbeispiel zwei unabhängig voneinander erzeugte Arbeitsdrücke, nämlich den ersten Arbeitsbremsdruck und den zweiten Arbeitsbremsdruck, aussteuern kann. Eine solche elektropneumatische Baueinheit, die als Zweikanalmodulator ausgebildet ist, kann beispielsweise als Zweikanalachsmodulator eingesetzt werden, um linken und rechten Rädern einer Achse radgerecht einen Bremsdruck bereitzustellen. Sie kann aber auch in sogenannter längsverbauter Weise einen Druck für eine erste und eine zweite Achse aussteuern, der dann an der Achse noch radgerecht moduliert wird, beispielsweise mittels ABS-Ventilen. Insofern kann beispielsweise der erste Arbeitsbremsdruck einer Vorderachse und der zweite Arbeitsbremsdruck einer Hinterachse bereitgestellt werden. Es kann bevorzugt auch vorgesehen sein, dass der erste Arbeitsbremsdruck einer Vorderachse und der zweite Arbeitsbremsdruck einem Anhängersteuerventil bereitgestellt wird. Im Übrigen gilt für die Ausgestaltung der zweiten elektromagnetischen Vorsteuereinheit und der zweiten Hauptventileinheit das bereits mit Bezug auf die erste elektromagnetische Vorsteuereinheit und die erste Hauptventileinheit Beschriebene.

In einem zweiten Aspekt löst die Erfindung die eingangs genannte Aufgabe bei einem elektronisch steuerbaren pneumatischen Bremssystem der eingangs genannten Art, welches einen Vorderachsmodulator zum Bereitstellen eines Vorderachsbetriebsbremsdrucks an einem ersten Vorderachsbetriebsbremsaktuator und einem zweiten Vorderachsbetriebsbremsaktuator an einer Vorderachse des Fahrzeugs; und einen Hinterachsmodulator zum Bereitstellen eines Hinterachsbetriebsbremsdrucks an wenigstens einem ersten Hinterachsbetriebsbremsaktuator und einem zweiten Hinterachsbetriebsbremsaktuator an einer Hinterachse des Fahrzeugs durch eine elektropneumatische Baueinheit nach einer der vorstehend beschriebenen bevorzugten Ausführungsformen einer elektropneumatischen Baueinheit gemäß dem ersten Aspekt der Erfindung, wobei ferner der erste Redundanzbremsdruckanschluss mit einem Vorderachsredundanzanschluss des Vorderachsmodulators und/oder einem Hinterachsredundanzanschluss des Hinterachsmodulators verbunden ist, um eine redundante Aussteuerung des Vorderachsbetriebsbremsdrucks und/oder Hinterachsbetriebsbremsdrucks zu veranlassen.

Es soll verstanden werden, dass das elektronisch steuerbare pneumatische Bremssystem gemäß dem zweiten Aspekt der Erfindung und die elektropneumatische Baueinheit gemäß dem ersten Aspekt der Erfindung gleiche und ähnliche Unteraspekte aufweisen wie sie insbesondere in den abhängigen Ansprüchen niedergelegt sind. Insofern wird für bevorzugte Ausführungsformen, Vorteile sowie weitere technische Merkmale auf die obige Beschreibung zum ersten Aspekt der Erfindung verwiesen.

In einer bevorzugten Weiterbildung weist das elektronisch steuerbare pneumatische Bremssystem eine zentrale Steuereinheit auf, die Vorderachsbremssignale an dem Vorderachsmodulator bereitstellt, um eine elektronische Aussteuerung des Vorderachsbetriebsbremsdrucks zu veranlassen, und die Hinterachsbremssignale an dem Hinterachsmodulator bereitstellt, um eine elektronische Aussteuerung des Hinterachsbetriebsbremsdrucks zu veranlassen, wobei die zentrale Steuereinheit das erste Ausfallbremsventil ansteuert. Die zentrale Steuereinheit ist vorzugsweise mit dem Hinterachsmodulator integriert, sodass der Hinterachsmodulator nur ein funktionaler Teil der zentralen Steuereinheit ist. Die zentrale Steuereinheit ist vorzugsweise die zentrale Steuereinheit eines Betriebsbremssystems des elektronisch steuerbaren pneumatischen Bremssystems und steuert das elektronisch steuerbare pneumatische Bremssystem im Betriebsfall. Die zentrale Steuereinheit kann beispielsweise über eine BUS-Verbindung mit dem Vorderachsmodulator verbunden sein, oder durch eine direkte elektrische Verkabelung elektromagnetische Ventile des Vorderachsmodulators steuern. Es kann vorgesehen sein, dass der Vorderachsmodulator von dem ersten Druckluftvorrat mit Vorratsdruck versorgt wird und der Hinterachsmodulator von einem zweiten Druckluftvorrat mit Vorratsdruck versorgt wird, oder umgekehrt. Die elektropneumatische Baueinheit ist in dieser Ausführungsform vorzugsweise nicht Teil der zentralen Steuereinheit, auch wenn dies in bestimmten Ausführungsformen vorgesehen sein kann. Es kann vorgesehen sein, dass die zentrale Steuereinheit diejenige elektronische Steuereinheit ist, die die Ausfallsicherheitsventilanordnung ansteuert, das heißt insbesondere das erste Ausfallbremsventil, das optional vorgesehene Bistabilventil und gegebenenfalls auch das zweite Ausfallbremsventil, auch wenn dies vorzugsweise von einer anderen, nämlich insbesondere der weiteren elektronischen Steuereinheit, angesteuert wird.

In einer bevorzugten Weiterbildung ist die elektropneumatische Baueinheit ein sekundäres Bremsmodul des elektronisch steuerbaren pneumatischen Bremssystems und dazu ausgebildet, für den Fall, dass die zentrale Steuereinheit verhindert ist, den Vorderachsbetriebsbremsdruck und/oder Hinterachsbetriebsbremsdruck elektronisch auszusteuern, eine redundante Aussteuerung des Vorderachsbetriebsbremsdrucks und/oder Hinterachsbetriebsbremsdrucks zu veranlassen. In diesem Fall umfasst die elektropneumatische Baueinheit auch die elektronische Steuereinheit, die dann vorzugsweise über einen Fahrzeug-BUS mit einer Einheit für autonomes Fahren verbunden ist und von dieser Bremsanforderungssignale empfängt. Die elektronische Steuereinheit der elektropneumatischen Baueinheit ist in diesem Fall vorzugsweise dazu ausgebildet, die Bremsanforderungssignale umzusetzen und den Vorderachsbetriebsbremsdruck bzw. Hinterachsbetriebsbremsdruck redundant auszusteuern, insbesondere als ersten und/oder zweiten Redundanzbremsdruck.

Erst wenn dann beispielsweise die elektronische Steuereinheit der elektropneumatischen Baueinheit einen weiteren Fehler hat und den Vorderachsbetriebsbremsdruck bzw. Hinterachsbetriebsbremsdruck nicht oder nicht richtig redundant aussteuern kann, wird das erste Ausfallbremsventil stromlos geschaltet und auf diese Weise basierend auf dem Ausfallversorgungsdruck der Redundanzdruck ausgesteuert. Auf diese Weise sind zwei Rückfallebenen in dem Bremssystem gebildet. Eine Betriebsebene wird vorzugsweise durch die zentrale Steuereinheit abgebildet, eine erste Rückfallebene durch die elektropneumatische Baueinheit, die das sekundäre Bremsmodul bildet, und eine zweite Rückfallebene ebenfalls durch die elektropneumatische Baueinheit, nämlich dann, wenn die elektronische Steuereinheit der elektropneumatischen Baueinheit stromlos ist und das erste Ausfallbremsventil stromlos geschaltet wird und auf diese Weise der erste Redundanzbremsdruck an dem ersten Redundanzbremsdruckanschluss ausgesteuert wird. Gemäß einer weiteren bevorzugten Ausführungsform weist das elektronisch steuerbare pneumatische Bremssystem eine Parkbremseinheit zum Bereitstellen eines Parkbremsdrucks an einem ersten Federspeicherbremszylinder und einem zweiten Federspeicherbremszylinder an der Hinterachse des Fahrzeugs auf, wobei der Ausfallversorgungsanschluss mit dem ersten Federspeicherbremszylinder und dem zweiten Federspeicherbremszylinder verbunden ist, um den Parkbremsdruck von diesem als Ausfallversorgungsdruck zu empfangen. Die Weiterbildung schließt die Erkenntnis ein, dass ein andauerndes Halten des gebremsten Zustands des Fahrzeugs vorteilhaft ist für die Sicherheit des Fahrzeugs. Nach einer Ausfallbremsung mittels des Ausfallbremsventils kann es zu einer Leckage in dem Bremskreis kommen, aus dem der Ausfallversorgungsdruck stammt. Stammt der Ausfallversorgungsdruck beispielsweise aus dem ersten Druckluftvorrat, kann es auf Dauer vorkommen, dass der erste Druckluftvorrat leerläuft, weil eine Leckage vorhanden ist. In diesem Fall würde dann der Ausfallversorgungsdruck wieder absinken und dies würde zur Folge haben, dass der Redundanzbremsdruck nicht mehr in voller Höhe oder ausreichender Höhe ausgesteuert ist, sodass Betriebsbremsaktuatoren, die diesen empfangen, gegebenenfalls wieder gelöst werden. Wird allerdings der Ausfallversorgungsdruck von einem Federspeicherbremszylinder bereitgestellt, wird zunächst dieser Druck aus dem Federspeicherbremszylinder verbraucht. Dadurch wird der Federspeicherbremszylinder teilweise entlüftet, also in Richtung Zuspannen aktiviert. Tritt dann eine Leckage auf, wird der Federspeicherbremszylinder weiter entleert, bis dieser vollständig leer ist und dann aber auch vollständig zugespannt ist. Der Redundanzbremsdruck sinkt ab, das Fahrzeug wird aber durch den Federspeicherbremszylinder gehalten, sodass weiterhin ein sicherer Zustand aufrechterhalten bleibt. Der Druck des Federspeicherbremszylinders ist ein während des Fahrbetriebs des Fahrzeugs permanent ausgesteuerter Druck, der besonders vorteilhaft als Ausfallversorgungsdruck verwendet werden kann.

In einer bevorzugten Weiterbildung ist vorgesehen, das die elektropneumatische Baueinheit mit der Parkbremseinheit zu einer Baueinheit integriert ist. Dies kann einerseits durch eine vollständige Integration in ein Gehäuse vorgenommen werden, oder durch ein Anflanschen von der elektropneumatischen Baueinheit an eine bestehende Parkbremseinheit. Dies ist insbesondere dann vorteilhaft, wenn der Parkbremsdruck als Ausfallversorgungsdruck verwendet wird, auch wenn dies nicht zwingend erforderlich ist, sondern die elektropneumatische Baueinheit auch mit der Parkbremseinheit integriert sein kann, obwohl der Ausfallversorgungsdruck aus einer andere Quelle, wie insbesondere dem ersten Druckluftvorrat, dem zweiten Druckluftvorrat oder einem weiteren Druckluftvorrat stammt.

In einer weiteren bevorzugten Ausführungsform ist ein Anhängersteuerventil zum Bereitstellen eines Anhängerbremsdrucks an einem Anhängerbremsdruckanschluss vorgesehen, wobei der erste Redundanzbremsdruckanschluss oder ein weiterer Redundanzbremsdruckanschluss der elektropneumatischen Baueinheit mit einem Anhängerredundanzanschluss des Anhängersteuerventils verbunden ist, um eine redundante Ansteuerung des Anhängerbremsdrucks zu veranlassen. Das Anhängersteuerventil kann wiederum unmittelbar von der zentralen Steuereinheit angesteuert werden, oder auch über eine eigene Intelligenz in Form einer elektronischen Steuereinheit verfügen, die vorzugsweise über einen BUS mit der zentralen Steuereinheit und/oder dem Fahrzeug-BUS verbunden ist, um auf diese Weise Bremsanforderungssignale zu empfangen. Das Anhängersteuerventil umfasst gemäß dieser Ausführungsform aber auch einen Anhängerredundanzanschluss, an dem das Anhängersteuerventil einen pneumatischen Steuerdruck zum redundanten Aussteuern des Anhängerbremsdrucks empfangen kann. Gemäß dieser Ausführungsform kann also auch der Anhänger in der zweiten oder weiteren Rückfallebene mittels der elektropneumatischen Baueinheit redundant eingebremst und zum Stillstand gebracht werden.

In einem dritten Aspekt löst die Erfindung die eingangs genannte Aufgabe durch ein Verfahren zum Steuern eines elektronisch steuerbaren pneumatischen Bremssystems nach einer der vorstehend beschriebenen bevorzugten Ausführungsformen eines elektronisch steuerbaren Bremssystems gemäß dem zweiten Aspekt der Erfindung, welches die Schritte umfasst: Bereitstellen eines Vorratsdrucks an einem Vorratsanschluss einer elektropneumatischen Baueinheit; Bereitstellen eines Ausfallversorgungsdrucks, der gegenüber dem Vorratsdruck begrenzt und geringer als dieser ist an einem Ausfallversorgungsanschluss der elektropneumatischen Baueinheit, wenigstens während das Fahrzeug fährt; und Aussperren des Ausfallversorgungsdrucks im fehlerfreien Zustand des elektronisch steuerbaren pneumatischen Bremssystems.

Es soll verstanden werden, dass das Verfahren gemäß dem dritten Aspekt der Erfindung, das elektronisch steuerbare pneumatische Bremssystem gemäß dem zweiten Aspekt der Erfindung sowie die elektropneumatische Baueinheit gemäß dem ersten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

In einer bevorzugten Ausführungsform umfasst das Verfahren für den Fall eines Fehlers des elektronisch steuerbaren Bremssystems die Schritte: Stromlosschalten eines ersten Ausfallbremsventils der elektropneumatischen Baueinheit; und Durchsteuern des Ausfallversorgungsdrucks durch das erste Ausfallbremsventil zum Auslösen einer redundanten Bremsung des Fahrzeugs mittels Vorderachsbetriebsbremsaktuatoren und/oder Hinterachsbetriebsbremsaktuatoren. Das Verfahren kann ferner den Schritt umfassen: Begrenzen der Höhe des Ausfallversorgungsdrucks, vorzugsweise mittels eines Druckbegrenzers.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: ein erstes Ausführungsbeispiel einer elektropneumatischen Baueinheit;
- Figur 2: ein Nutzfahrzeug mit einem elektronisch steuerbaren pneumatischen Bremssystem sowie einer elektropneumatischen Baueinheit;
- Figur 3: ein zweites Ausführungsbeispiel einer elektropneumatischen Baueinheit;
- Figur 4: ein drittes Ausführungsbeispiel der elektropneumatischen Baueinheit;
- Figur 5: ein viertes Ausführungsbeispiel der elektropneumatischen Baueinheit; und in
- Figur 6: ein fünftes Ausführungsbeispiel der elektropneumatischen Baueinheit.

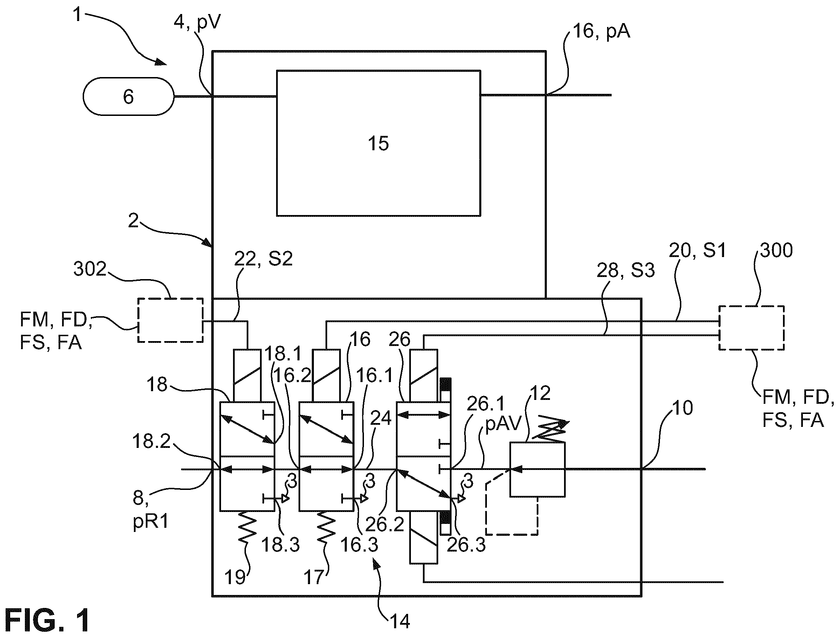

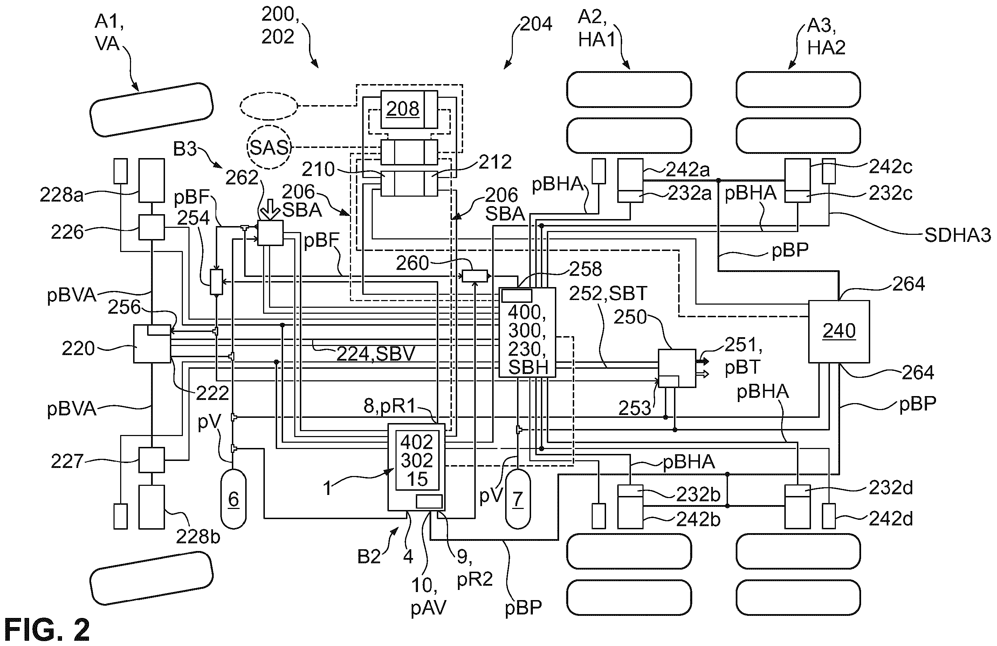

Fig. 1 zeigt eine elektropneumatische Baueinheit 1 gemäß der Erfindung. Die elektropneumatische Baueinheit 1 weist ein Gehäuse 2 auf, in das mehrere Ventile integriert sind, wie im Folgenden beschrieben werden wird. Die elektropneumatische Baueinheit 1 weist an dem Gehäuse einen Vorratsanschluss 4 auf, über den die elektropneumatische Baueinheit 1 Vorratsdruck pV von wenigstens einem ersten Druckluftvorrat 6 empfängt. Darüber hinaus weist die elektropneumatische Baueinheit 1 einen ersten Redundanzbremsdruckanschluss 8 auf, zum Bereitstellen eines ersten Redundanzbremsdrucks pR1 für eine erste Achse A1, beispielsweise eine Vorderachse VA (vgl. Fig. 2) eines Fahrzeugs 200, insbesondere Nutzfahrzeugs 202. Darüber hinaus weist die elektropneumatische Baueinheit 1 einen Ausfallversorgungsanschluss 10 auf zum Empfangen eines Ausfallversorgungsdrucks pAV, der gegenüber dem Vorratsdruck pV begrenzt und geringer als dieser ist. Der Ausfallversorgungsanschluss 10 ist in der in Fig. 1 gezeigten Ausführungsform im Inneren der elektropneumatischen Baueinheit 1 vorgesehen, über den der elektropneumatischen Baueinheit 1 ein Ausfallversorgungsdruck pAV bereitgestellt werden kann, der gegenüber dem Vorratsdruck pV begrenzt und geringer als dieser ist. Es ist aber nicht zwingend erforderlich, dass der bereits am Ausfallversorgungsanschluss 10 empfangene Druck begrenzt ist, sondern vielmehr kann eine Druckbegrenzung auch im Inneren der elektropneumatischen Baueinheit 1 vorgenommen werden, wie in Fig. 1 gezeigt. Dort ist dem Ausfallversorgungsanschluss 10 ein Druckbegrenzer 12 unmittelbar nachgeschaltet, sodass der von dem Druckbegrenzer 12 ausgesteuerte Druck der begrenzte Ausfallversorgungsdruck pAV ist. Der Vorratsanschluss 4 ist gemäß dem in Fig. 1 gezeigten Ausführungsbeispiel im Inneren der elektropneumatischen Baueinheit 1 mit einer Arbeitsventilanordnung 15 verbunden, die den Vorratsdruck pV empfängt und an einem ersten Arbeitsanschluss 16 einen Arbeitsdruck pA aussteuert. Der Arbeitsdruck pA kann beispielsweise ein Bremsdruck für eine oder mehrere Achsen des Fahrzeugs 200 sein, ein Anhängerbremsdruck oder ein Parkbremsdruck. Die Arbeitsventilanordnung 15 kann ein oder mehrere elektrisch schaltbare Elektromagnetventile aufweisen, wie im Folgenden noch genauer beschrieben werden wird. Neben der Arbeitsventilanordnung 15 kann die elektropneumatische Baueinheit 1 auch eine in Fig. 1 nicht gezeigte elektronische Steuereinheit umfassen, die wenigstens die Arbeitsventilanordnung 15 ansteuert.

Die elektropneumatische Baueinheit 1 weist eine Ausfallsicherheitsventilanordnung 14 auf, die sowohl mit dem Ausfallversorgungsanschluss 10 als auch mit dem Redundanzbremsdruckanschluss 8 verbunden ist. Die Ausfallsicherheitsventilanordnung 14 dient dazu, in einem Fehlerfall des elektronisch steuerbaren pneumatischen Bremssystems 204 (vgl. Fig. 2) des Fahrzeugs 200 den ersten Redundanzbremsdruck pR1 auszusteuern, um auf diese Weise ein sicheres Verzögern des Fahrzeugs 100 vorzugsweise bis zum Stillstand zu ermöglichen. Auf diese Weise soll eine Fail-safe-Regelung umgesetzt werden. Hierzu wird der Ausfallversorgungsdruck pAV durch die Ausfallsicherheitsventilanordnung 14 durchgesteuert oder gegebenenfalls durch diese volumenverstärkt, und als erster Redundanzbremsdruck pR1 an dem ersten Redundanzbremsdruckanschluss 8 ausgesteuert. Dieser ist dann seinerseits verbunden oder verbindbar mit einem oder mehreren entsprechenden Redundanzanschlüssen des elektronisch steuerbaren pneumatischen Bremssystems 204, wie im Folgenden noch genauer beschrieben werden wird.

In der in Fig. 1 gezeigten Ausführungsform weist die Ausfallsicherheitsventilanordnung 14 ein erstes monostabiles Ausfallbremsventil 16 sowie ein optionales zweites monostabiles Ausfallbremsventil 18 auf.

Das erste Ausfallbremsventil 16 ist über eine erste Steuerleitung 20 signal- und energieführend mit einer ersten elektronischen Steuereinheit 300 verbunden. Die erste Steuereinheit 300 ist dabei einer ersten Redundanzebene B2 (vgl. Fig. 2) des elektronisch steuerbaren pneumatischen Bremssystems 204 zugeordnet. Das zweite Ausfallbremsventil 18 ist über eine zweite Steuerleitung 22 signal- und energieführend mit einer zweitem elektronischen Steuereinheit 302 verbunden. Die zweite elektronische Steuereinheit 302 ist dabei einer ersten Betriebsebene B1 des in Fig. 1 nicht näher dargestellten elektronisch steuerbaren pneumatischen Bremssystems 204 zugeordnet.

Das erste Ausfallbremsventil 16 und das zweite Ausfallbremsventil 18 sind in einer Ventilhauptleitung 24 der Ausfallsicherheitsventilanordnung 14 pneumatisch in Reihe geschaltet. Die Ventilhauptleitung 24 erstreckt sich dabei von dem Ausfallversorgungsanschluss 10 zu dem ersten Redundanzbremsdruckanschluss 8.

Das erste Ausfallbremsventil 16 und das zweite Ausfallbremsventil 18 sind vorliegend in einem nicht aktivierten und stromlosen Zustand dargestellt, in dem sie sich jeweils in einer Öffnungsstellung befinden. In der Öffnungsstellung ist eine pneumatische Verbindung zwischen einem ersten Ausfallbremsventilanschluss 16.1 und einem zweiten Ausfallbremsventilanschluss 16.2 des ersten Ausfallbremsventils 16 hergestellt. In der aktivierten in Fig. 1 nicht gezeigten Schaltstellung ist der zweite Ausfallbremsventilanschluss 16.2 mit einem dritten Ausfallbremsventilanschluss 16.3 verbunden, der seinerseits mit einer Entlüftung 3 verbunden ist. In der Öffnungsstellung des zweiten Ausfallbremsventils 18 ist eine pneumatische Verbindung zwischen einem vierten Ausfallbremsventilanschluss 18.1 und einem fünften Ausfallbremsventilanschluss 18.2 des zweiten Ausfallbremsventils 18 hergestellt. Ein sechster Ausfallbremsventilanschluss 18.3 des zweiten Ausfallbremsventils 18 ist wiederum mit einer Entlüftung 3 verbunden. In der stromlosen stabilen Schaltstellung ist der fünfte Ausfallbremsventilanschluss 18.2 mit dem sechsten Ausfallbremsventilanschluss 18.3 verbunden, sodass der erste Redundanzbremsdruckanschluss 8 entlüftet ist.

Über ein Bereitstellen eines ersten Schaltsignal S1 über die erste Steuerleitung 20 kann das erste Ausfallbremsventil 16 aus der Öffnungsstellung gegen den Widerstand einer ersten Rückstellfeder 17 in eine Entlüftungsstellung geschaltet werden. In der Entlüftungsstellung wird eine pneumatische Verbindung zwischen dem ersten Ausfallbremsventilanschluss 16.1 und dem dritten Ausfallbremsventilanschluss 16.3 hergestellt. Über ein Bereitstellen eines zweiten Schaltsignals S2 über die zweite Steuerleitung 22 kann das zweite Ausfallbremsventil 18 aus der Öffnungsstellung gegen den Widerstand einer zweiten Rückstellfeder 19 in eine Entlüftungsstellung geschaltet werden. In der Entlüftungsstellung wird eine pneumatische Verbindung zwischen dem vierten Ausfallbremsventilanschluss 60.1 und dem sechsten Ausfallbremsventilanschluss 18.3 hergestellt.

In einem normalen Betrieb des Fahrzeugs 200 ist insbesondere vorgesehen, dass sich die beiden Ausfallbremsventile 16, 18 in ihrer jeweiligen Entlüftungsstellung befinden, sodass der erster Redundanzbremsdruckanschluss 8 entlüftet wird. In diesem Zustand besteht somit keine pneumatische Verbindung zwischen dem Ausfallversorgungsanschluss 10 und dem erster Redundanzbremsdruckanschluss 8, da die pneumatische Verbindung an mindestens zwei Stellen, nämlich an dem ersten Ausfallbremsventil 16 und an dem zweiten Ausfallbremsventil 18, unterbrochen ist.

In dem in Fig. 1 gezeigten Ausführungsbeispiel ist in der Ventilhauptleitung 24 zusätzlich ein Bistabilventil 26 angeordnet, welches mit dem ersten Ausfallbremsventil 16 sowie auch dem zweiten Ausfallbremsventil 18 pneumatisch in Reihe geschaltet ist. Konkret ist das Bistabilventil 26 in dem hier gezeigten Ausführungsbeispiel zwischen das erste Ausfallbremsventil 16 und den Druckbegrenzer 12 geschaltet. Gesehen von dem Ausfallversorgungsanschluss 10 ist das Bistabilventil 26 also den ersten und zweiten Ausfallbremsventilen 16, 18 vorgeschaltet. Das Bistabilventil 26 weist einen ersten Bistabilventilanschluss 26.1, einen zweiten Bistabilventilanschluss 26.2 und einen dritten Bistabilventilanschluss 26.3 auf. Das Bistabilventil 26 hat eine erste und eine zweite stabile Schaltstellung, wobei es in Fig. 1 in der zweiten stabilen Schaltstellung gezeigt ist. In der ersten stabilen Schaltstellung ist der erste Bistabilventilanschluss 26.1 mit dem zweiten Bistabilventilanschluss 26.2 verbunden und eine pneumatische Verbindung zwischen dem Ausfallversorgungsanschluss 10 und dem ersten Redundanzdruckanschluss 8 ist möglich, wenn auch das erste und das zweite Ausfallbremsventil 16, 18 in der in Fig. 1 gezeigten Schaltstellung sind. Ist jedoch das Bistabilventil 26 in der zweiten wie in Fig. 1 gezeigten Schaltstellung, ist der zweite Bistabilventilanschluss 26.2 mit dem dritten Bistabilventilanschluss 26.3 verbunden, der seinerseits mit einer Entlüftung 3 verbunden ist. Auf diese Weise ist die Hauptventilleitung 24 entlüftet, und ein erster Redundanzbremsdruck pR1 kann nicht ausgesteuert werden. Das Bistabilventil 26 ist über eine Bistabilventil-Signalleitung 28 mit der ersten elektronischen Steuereinheit 300 verbunden, könnte aber ebenso mit der zweiten elektronischen Steuereinheit 302 oder einer anderen elektronischen Steuereinheit, die in Fig. 1 nicht gezeigt ist, verbunden sein. In Antwort auf ein drittes Schaltsignal S3 kann das Bistabilventil 26 zwischen den beiden stabilen Schaltstellungen hin- und hergeschaltet werden. Insbesondere wird das Bistabilventil 26 in Abhängigkeit von einem autonomen Betrieb des Fahrzeugs 200 geschaltet. Befindet sich das Fahrzeug 200 in einem manuellen Betrieb, ist eine Aussteuerung des ersten Redundanzbremsdrucks pR1 üblicherweise nicht notwendig, da dieser durch Betätigung eines Fußbremspedals 262, wie später noch mit Bezug auf Fig. 2 genauer beschrieben, pneumatisch gebremst werden kann. Die Aussteuerung des ersten Redundanzbremsdrucks pR1 dient insbesondere dazu, in einem autonomen Betrieb des Fahrzeugs 200 ein unkontrolliertes Ausrollen des Fahrzeugs 200 zu verhindern. Insofern kann das Bistabilventil 26 im manuellen Betrieb in die in Fig. 1 gezeigte zweite Schaltstellung gebracht werden, während es im automatisierten Betrieb des Fahrzeugs 200 vorzugsweise in der ersten in Fig. 1 nicht gezeigten Schaltstellung ist, um dann in einem Fehlerfall die Durchsteuerung des Ausfallversorgungsdrucks pAV zu ermöglichen und die Hauptleitung 24 freigeben zu können.

Im manuellen Fahrbetrieb ist die Schaltstellung der ersten und zweiten Ausfallbremsventile 16, 18 unerheblich, da die Ventilhauptleitung 24 ohnehin durch das Bistabilventil 26 entlüftet wird. Auf diese Weise können die ersten und zweiten Ausfallbremsventile 16, 18 in ihrer stabilen Schaltstellung verharren, wodurch elektrische Energie eingespart werden kann. Befindet sich aber das Bistabilventil 26 in der ersten, in Fig. 1 nicht gezeigten Schaltstellung, sodass dieses grundsätzlich die Ventilhauptleitung 24 freigeben kann, müssen die ersten und zweiten Ausfallbremsventile 16, 18 bzw. wenigstens eines von beiden, in die aktivierte in Fig. 1 nicht gezeigte Schaltstellung gebracht werden, um die Ventilhauptleitung 24 nach wie vor entlüftet zu lassen und somit die Aussteuerung des ersten Redundanzbremsdrucks pR1 zu verhindern. Im automatisierten Betrieb stellen also die erste elektronische Steuereinheit 300 sowie die zweite elektronische Steuereinheit 302 die ersten und zweiten Schaltsignale S1, S2 bereit, sodass die ersten und zweiten Ausfallbremsventile 16, 18 bestromt sind.

Im Falle eines Mehrfachfehlers FM, insbesondere eines Doppelfehlers FD, d. h. wenn sowohl das erste Schaltsignal S1 und gleichzeitig das zweite Schaltsignal S2 ausbleibt und sowohl das erste Ausfallbremsventil 16 als auch das zweite Ausfallbremsventil 18 somit stromlos sind gehen sowohl das erste Ausfallbremsventil 16 als auch das zweite Ausfallbremsventil 18 durch die von der jeweiligen Rückstellfeder 17, 19 erzeugte Rückstellkraft selbsttätig zurück in ihre in Fig. 1 gezeigte Öffnungsstellung.

Ein solcher Doppelfehler FD kann beispielsweise durch einen gleichzeitigen Stromausfall FS sowohl in der Betriebsebene B1 als auch in der ersten Redundanzebene B2 entstehen, wenn sowohl die erste elektronische Steuereinheit 300 als auch die zweite elektronische Steuereinheit 302 ohne Energieversorgung sind. In einem solchen gleichzeitigen Stromausfall FS kann entsprechend kein Schaltsignal S1, S2 an die ersten und zweiten Ausfallbremsventile 16, 18 geleitet werden.

Des Weiteren kann sich ein Doppelfehler FD auch darin äußern, dass sowohl in der ersten elektronischen Steuereinheit 300 als auch in der zweiten elektronischen Steuereinheit 300 ein Ausnahmefehler FA auftritt, und von der jeweiligen elektronischen Steuereinheit 300, 302 als Fehlermaßnahme (insbesondere in Ermangelung anderer Programmalternativen) ein Nullsignal geschaltet wird, und somit zum Schalten der ersten und zweiten Ausfallbremsventile 16, 18 in die Öffnungsstellung die ersten und zweiten Schaltsignale S1, S2 auf 0 gesetzt werden. Dabei kann für das Vorliegen eines Mehrfachfehlers FM verschiedene Arten von Fehlern in den einzelnen elektronischen Steuereinheiten 300, 302 vorliegen, beispielsweise kann bei einem Doppelfehler FD in der ersten elektronischen Steuereinheit 300 ein Stromausfall FA, und in der zweiten elektronischen Steuereinheit 302 ein Ausnahmefehler FA vorliegen, oder umgekehrt.

Fig. 2 illustriert nun ein Fahrzeug 200, nämlich insbesondere Nutzfahrzeug 202, mit einer ersten Achse A1, die hier eine Vorderachse VA ist, einer zweiten Achse A2, die hier eine erste Hinterachse HA1 ist sowie einer dritten Achse A3, die hier eine zweite Hinterachse HA2 ist. Das Fahrzeug 200 umfasst ein elektronisch steuerbares pneumatisches Bremssystem 204, welches eine Betriebsebene B1 und eine erste Redundanzebene B2 umfasst. Daneben umfasst es noch eine zweite Redundanzebene B3, wie nachfolgend beschrieben, sowie eine elektropneumatische Baueinheit 1, die dazu ausgebildet ist, das Fahrzeug 200 zu bremsen, für den Fall, dass ein Doppelfehler FD oder ein schwerer Einfachfehler in der Betriebsebene B1 sowie der ersten und/oder zweiten Redundanzebene B2, B3 auftritt.

In der Betriebsebene B1 umfasst das elektronisch steuerbare pneumatische Bremssystem 204 eine zentrale Steuereinheit 400, auch als Zentralmodul bezeichnet, die über einen Fahrzeug-BUS 206 mit einer Einheit für autonomes Fahren 208 verbunden ist und von dieser Bremsanforderungssignale SBA empfängt. Die zentrale Steuereinheit 400 wird von einer ersten Spannungsquelle 210 mit elektrischer Energie versorgt.

An der Vorderachse VA umfasst das elektronisch steuerbare pneumatische Bremssystem 204 einen Vorderachsmodulator 220, der hier als Einkanalmodulator ausgebildet ist und Vorratsdruck pV von einem ersten Druckluftvorrat 6 empfängt. Zu diesem Zweck umfasst der Vorderachsmodulator 220 in bekannter Weise einen Vorderachs-Vorratsanschluss 222, der mit dem ersten Druckluftvorrat 6 verrohrt ist. Der Vorderachsmodulator 220 ist über eine Vorderachssignalleitung 224 mit der zentralen Steuereinheit 400 verbunden und empfängt von dieser Vorderachsbremssignale SBV, die ein Schalten von einem oder mehreren elektromagnetischen Ventilen (nicht gezeigt) des Vorderachsmodulators 220 veranlassen, wobei infolgedessen der Vorderachsmodulator 220 einen Vorderachsbremsdruck pBVA aussteuert, der über erste und zweite ABS-Ventile 226, 227 radgerecht an einem ersten Vorderachsbetriebsbremsaktuator 228a und einem zweiten Vorderachsbetriebsbremsaktuator 228b ausgesteuert wird. Die Vorderachssignalleitung 224 kann sowohl als direkte Verkabelung der elektromagnetischen Ventile des Vorderachsmodulators 220 mit der zentralen Steuereinheit 400 umgesetzt sein, sodass vorzugsweise in die zentrale Steuereinheit 400 Endstufen für elektromagnetische Ventile des Vorderachsmodulators 220 integriert sind. Alternativ dazu kann die Vorderachssignalleitung 224 auch als BUS-Verbindung (CAN-BUS) ausgebildet sein, insbesondere dann, wenn der Vorderachsmodulator 220 über eine eigene Intelligenz verfügt.

Das elektronisch steuerbare pneumatische Bremssystem 204 umfasst auch einen Hinterachsmodulator 230, der hier in die zentrale Steuereinheit 400 integriert ist, gemeinsam mit der ersten elektronischen Steuereinheit 300. Der Hinterachsmodulator 230 empfängt Vorratsdruck pV von einem zweiten Druckluftvorrat 7. Die erste elektronische Steuereinheit 300 setzt die über den Fahrzeug-BUS 206 empfangenen Bremsanforderungssignale SBA in Hinterachsbremssignal SBH um und schaltet ein oder mehrere hier nicht im Detail gezeigte elektromagnetische Ventile des Hinterachsmodulators 230, sodass ein Hinterachsbetriebsbremsdruck pBHA erzeugt wird, der an ersten und zweiten Hinterachsbetriebsbremsaktuatoren 232a, 232b an der ersten Hinterachse HA1 sowie an dritten und vierten Hinterachsbetriebsbremsaktuatoren 232c, 232d an der zweiten Hinterachse HA2 ausgesteuert wird. Der Hinterachsbetriebsbremsdruck pBHA wird hier seitengerecht ausgesteuert und insofern ist der Hinterachsmodulator 230 ein Zweikanalmodulator.

Zusätzlich umfasst das hier gezeigte elektronisch steuerbare pneumatische Bremssystem 204 eine Parkbremseinheit 240, die ebenfalls mit dem Fahrzeug-BUS 206 verbunden ist sowie der ersten Spannungsquelle 210 und von dieser elektrische Energie empfängt. Die Parkbremseinheit 240 ist hier sowohl mit dem ersten als auch mit dem zweiten Druckluftvorrat 6, 7 verbunden und empfängt von beiden Vorratsdruck pV. Das in Fig. 2 gezeigte Layout betrifft ein vornehmlich in Nordamerika vorhandenes Design, bei welchem kein separater Parkbremsvorrat vorgesehen ist. Es soll verstanden werden, dass anstelle der Verbindung mit dem ersten und zweiten Druckluftvorrat 6, 7 mit der Parkbremseinheit 240 auch ein dritter Druckluftvorrat vorhanden sein kann, der die Parkbremseinheit 240 separat mit Vorratsdruck versorgt.

Die Parkbremseinheit ist dazu vorgesehen, einen Parkbremsdruck pBP über einen Federspeicheranschluss 264 an ersten und zweiten Federspeicherbremszylindern 242a, 242b an der ersten Hinterachse HA1 sowie dritten und vierte Federspeicherbremszylindern 242c, 242d an der zweiten Hinterachse HA2 auzusteuern.

Das elektronisch steuerbare pneumatische Bremssystem 204 ist auch zum Versorgen eines Anhängers vorgesehen und weist hierzu eine Anhängersteuereinheit 250 auf, die ebenfalls Vorratsdruck pV sowohl von dem ersten Druckluftvorrat 6 als auch von dem zweiten Druckluftvorrat 7 empfängt. Die Anhängersteuereinheit 250 ist mit der zentralen Steuereinheit 400 verbunden und empfängt von dieser über eine Anhängersignalleitung 252 Anhängerbremssignale SBT. Insofern wird auch die Anhängersteuereinheit 250 von der ersten Spannungsquelle 210 versorgt. In Abhängigkeit von dem empfangenen Anhängerbremssignal SBT steuert die Anhängersteuereinheit 250 einen Anhängerbremsdruck pBT an einem Anhängerbremsdruckanschluss 251 aus. Über das Anhängerbremssignal SBT kann beispielsweise ein normales Betriebsbremssignal übergeben werden, ein Streckbremssignal zum Umsetzen einer Streckbremsfunktion, oder ein Anhängerparksignal zum Parken des Anhängers.

Zum Ausbilden einer ersten Redundanzebene B2, die in diesem Fall elektrisch ausgebildet ist, umfasst das elektronisch steuerbare pneumatische Bremssystem 204 ein sekundäres Bremsmodul 402, in welches auch die zweite elektronische Steuereinheit 302 integriert ist. Das sekundäre Bremsmodul kann als elektropneumatische Baueinheit 1 ausgebildet sein oder diese umfassen. Das sekundäre Bremsmodul 402 ist demzufolge auch mit dem ersten Druckluftvorrat 6 verbunden und empfängt Vorratsdruck pV von diesem. Das sekundäre Bremsmodul 402 ist ebenfalls an den Fahrzeug-BUS 206 angebunden und empfängt über diesen Bremsanforderungssignale SBA. Es wird von einer zweiten Spannungsquelle 212 versorgt, die unabhängig von der ersten Spannungsquelle 210 ist. Die zweite elektronische Steuereinheit 302 ist dazu in der Lage, die Bremsanforderungssignale SBA zu verarbeiten und eine Arbeitsventilanordnung 15 anzusteuern, um einen ersten Arbeitsdruck pA1 ggf. als ersten Redundanzbremsdruck pR1 an einem ersten Redundanzbremsdruckanschluss 8 auszusteuern sowie einen zweiten Arbeitsdruck pA2, ggf. als zweiten Redundanzbremsdruck pR2 an einem zweiten Redundanzbremsdruckanschluss 9 auszusteuern. Der erste Redundanzbremsdruck pR1 wird hier der Vorderachse VA bereitgestellt und der zweite Redundanzbremsdruck pR2 wir hier der Hinterachse HA1, HA2 bereitgestellt. Genauer gesagt wird der erste Redundanzbremsdruck pR1 in im Grunde bekannter Weise über ein erstes Wechselventil 254 an einem Vorderachsredundanzanschluss 256 des Vorderachsmodulators 220 ausgesteuert. Der Vorderachsmodulator 220 setzt dann den an diesem empfangenen ersten Redundanzbremsdruck um und steuert basierend hierauf den Vorderachsbremsdruck pBVA redundant aus. Zu diesem Zweck kann der Vorderachsmodulator 220 in im Grunde bekannter Weise ein monostabiles Redundanzventil sowie einen Relaiskolben oder ein pneumatisch schaltbares Hauptventil aufweisen, um den am Vorderachsredundanzanschluss 256 bereitgestellten ersten Redundanzbremsdruck pR1 volumenverstärkt auszusteuern. Der erste Redundanzbremsdruck pR1 wird auch an einem Anhängerredundanzanschluss 253 ausgesteuert, um so eine redundante Bremsung eines Anhängers zu ermöglichen.

In übereinstimmender Weise weist der Hinterachsmodulator 230 bzw. die zentrale Steuereinheit 400, in die der Hinterachsmodulator 230 integriert ist, einen Hinterachsredundanzanschluss 258 auf, an dem über ein zweites Wechselventil 260 der zweite Redundanzbremsdruck pR2 bereitgestellt werden kann. Das sekundäre Bremsmodul 402 steuert also den ersten und den zweiten Redundanzbremsdruck pR1, pR2 achsengerecht aus und kann somit wiederum als Zweikanalmodulator bezeichnet werden. Die zentrale Steuereinheit 400 ist dann wiederum dazu ausgebildet, basierend auf dem empfangenen zweiten Redundanzbremsdruck pR2 den Hinterachsbremsdruck pBHA auszusteuern. Zu diesem Zweck kann die zentrale Steuereinheit 400 wiederum in im Grunde bekannter Weise ein Redundanzventil sowie einen Relaiskolben oder ein pneumatisch schaltbares Hauptventil aufweisen, um den zweiten Redundanzbremsdruck pR2 volumenverstärkt als Hinterachsbremsdruck pBHA auszusteuern. Auf diese Weise kann eine elektronisch steuerbare Rückfallebene, in diesem Fall die erste Redundanzebene B2, vorgesehen werden.

Das in Fig. 2 gezeigte elektronisch schaltbare pneumatische Bremssystem 204 weist darüber hinaus eine manuell betätigbare Rückfallebene B3 auf, die in dem hier gezeigten Ausführungsbeispiel ein Fußbremspedal 262 umfasst. Über das Fußbremspedal 262 kann ein Fußbremsdruck pBF sowohl an dem ersten Wechselventil 254 als auch an dem zweiten Wechselventil 260 ausgesteuert werden. Die ersten und zweiten Wechselventile 254, 260 sind jeweils so ausgebildet, dass sie den höheren des anliegenden Fußbremsdrucks pBF und der ersten bzw. zweiten Redundanzdruck pR1, pR2 an den Vorderachsmodulator 220 bzw. Hinterachsmodulator 230 aussteuern. Auf diese Weise kann beispielsweise der ausgesteuerte erste und zweite Redundanzbremsdruck pR1, pR2 durch Betätigen des Fußbremspedals 262 übersteuert werden. Auch umgekehrt kann das sekundäre Bremsmodul 402 den durch einen Fahrer ausgesteuerten Fußbremsdruck pBF übersteuern.

Eine dritte Redundanzebene, die hier aber erfindungsgemäß nur als Fail-safe-Ebene ausgebildet ist, wird durch die elektropneumatische Baueinheit 1 gebildet. An das sekundäre Bremsmodul 402 ist der Parkbremsdruck pBP angeschlossen, genauer gesagt an den Ausfallversorgungsanschluss 10. Der Parkbremsdruck pBP ist ein gegenüber dem Vorratsdruck pV begrenzter Druck, der auch reduziert ist. Typische Beträge von Vorratsdrücken pV liegen in einem Bereich von 8 - 12 bar, während die Höhe des Parkbremsdrucks pBP typischerweise auf 8 bar begrenzt ist. Im hier gezeigten Ausführungsbeispiel beträgt die Höhe des Vorratsdrucks pV in etwa 12 bar, während der Parkbremsdruck pBP in etwa 8 bar beträgt.

Wird nun die elektropneumatische Baueinheit 1 wie in Fig. 1 gezeigt umgesetzt, wird, sofern sich das Fahrzeug 200 im autonomen Betrieb befindet, zunächst das Bistabilventil 26 in die in Fig. 1 nicht gezeigte erste Schaltstellung geschaltet. Sowohl das erste als auch das zweite Ausfallbremsventil 16, 18 sind bestromt, während die erste elektronische Steuereinheit 300 und die zweite elektronische Steuereinheit 302 ordnungsgemäß funktionieren. Fällt die erste elektronische Steuereinheit 300 aus, wird zunächst das erste Ausfallbremsventil 16 stromlos geschaltet. Die zweite elektronische Steuereinheit 302 kann dann als Teil des sekundären Bremsmoduls 402 die Steuerung des elektronisch steuerbaren pneumatischen Bremssystems 204 übernehmen, wie oben beschrieben, mittels Aussteuerung der ersten und zweiten Redundanzbremsdrücke pR1, pR2. Für den Fall, dass auch diese ausfällt, beispielsweise aufgrund des Doppelfehlers FD, wird das zweite Ausfallbremsventil 18 stromlos geschaltet und durch die zweite Feder 19 in die in Fig. 1 gezeigte Schaltstellung gebracht. In der Folge wird der Parkbremsdruck pBP, der am Ausfallversorgungsanschluss 10 bereitgestellt ist, durch den Druckbegrenzer 12 weiter begrenzt, durch das Bistabilventil 26, das erste Ausfallbremsventil 16, das zweite Ausfallbremsventil 18 durchgesteuert und am ersten Redundanzbremsanschluss 8 bereitgestellt und als erster Redundanzbremsdruck pR1 ausgesteuert, gelangt über das erste Wechselventil 254 zum Vorderachsredundanzanschluss 256, woraufhin der Vorderachsmodulator 220 den Vorderachsbremsdruck pBVA aussteuert und die Vorderachse VA einbremst. Da der Parkbremsdruck pBP ein statischer Druck ist, das heißt nicht weiter geschwindigkeitsabhängig angepasst wird, wird das Fahrzeug 200 auf diese Weise bis zum Stillstand gebremst. Indem der Parkbremsdruck pBP ein begrenzter und reduzierter Druck ist, wird ein Blockieren der Vorderachse VA verhindert.

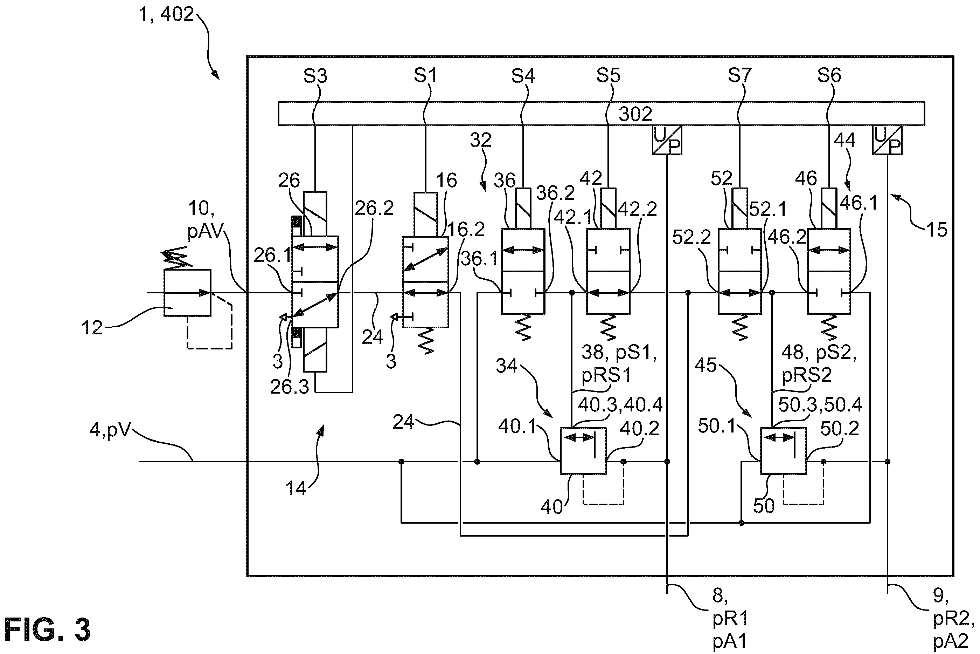

Fig. 3 zeigt nun die als sekundäres Bremsmodul 402 ausgebildete elektropneumatische Baueinheit 1. Das sekundäre Bremsmodul 402 weist einen Vorratsanschluss 4 auf, an dem die elektropneumatische Baueinheit 1 Vorratsdruck pV empfängt, den Ausfallversorgungsanschluss 10, dem hier der Druckbegrenzer 12 vorgeschaltet ist und nicht integriert, wie in dem mit Bezug auf Fig. 1 beschriebenen Ausführungsbeispiel, wobei an dem Ausfallversorgungsanschluss 10 der Ausfallversorgungsdruck pAV bereitgestellt wird, einen ersten Redundanzbremsdruckanschluss 8, an dem ein erster Redundanzbremsdruck pR1 ausgesteuert werden kann sowie einen zweiten Redundanzbremsdruckanschluss 9, an dem ein zweiter Redundanzbremsdruck pR2 ausgesteuert werden kann.

Die elektropneumatische Baueinheit 1 weist das erste Ausfallbremsventil 16 sowie das Bistabilventil 26 auf. Ein zweites Ausfallbremsventil 18, wie mit Bezug auf Fig. 1 beschrieben, ist in dem Ausführungsbeispiel gemäß Fig. 3 nicht vorgesehen. Das Bistabilventil 26 ist wiederum dem ersten Ausfallbremsventil 16, gesehen von dem Ausfallversorgungsanschluss 10, pneumatisch vorgeschaltet. Das Bistabilventil 26 und das erste Ausfallbremsventil 16 sind in der Ventilhauptleitung 24 pneumatisch in Reihe geschaltet. Neben der Ausfallsicherheitsventilanordnung 14 umfasst die elektropneumatische Baueinheit 1 in diesem Ausführungsbeispiel auch eine Arbeitsventilanordnung 15, die eine Struktur wie ein im Grunde bekannter Zweikanalachsmodulator aufweist. Die Arbeitsventilanordnung 15 umfasst in dem in Fig. 3 gezeigten Ausführungsbeispiel eine erste elektromagnetische Vorsteuereinheit 32 sowie eine erste Hauptventileinheit 34 auf. Die erste elektromagnetische Vorsteuereinheit 32 umfasst ein erstes Einlassventil 36, das als 2/2-Wege-Ventil ausgebildet ist und mit dem Vorratsanschluss 4 zum Empfangen von Vorratsdruck pV verbunden ist. Das erste Einlassventil 36 umfasst einen ersten Einlassventilanschluss 36.1 und einen zweiten Einlassventilanschluss 36.2, wobei der erste Einlassventilanschluss 36.1 mit dem Vorratsanschluss 4 verbunden ist. **In** einer ersten in Fig. 3 gezeigten stabilen Schaltstellung ist das erste Einlassventil 36 geschlossen und der erste und der zweite Einlassventilanschluss 36.1, 36.2 sind getrennt. **In** einer zweiten, aktivierten in Fig. 3 nicht gezeigten Schaltstellung sind hingegen der erste und zweite Einlassventilanschluss 36.1, 36.2 verbunden, sodass das erste Einlassventil 36 einen erste Arbeitssteuerdruck pS1 in eine erste Steuerleitung 38 aussteuert. Die erste Hauptventileinheit 34 umfasst hier ein erstes Relaisventil 40. Das erste Relaisventil 40 weist einen ersten Relaisventil-Vorratsanschluss 40.1, einen ersten Relaisventil-Arbeitsanschluss 40.2, einen hier nicht gezeigten Relaisventil-Entlüftungsanschluss sowie einen ersten Relaisventil-Steueranschluss 40.3 auf. Der erste Arbeitssteuerdruck pS1 wird an dem ersten Relaisventil-Steueranschluss 40.3 empfangen. Das erste Relaisventil 40 volumenverstärkt diesen ersten Arbeitssteuerdruck pS1 und steuert in entsprechender Weise einen ersten Arbeitsbremsdruck pA1 an dem ersten Relaisventil-Arbeitsanschluss 40.2 aus. Der erste Relaisventil-Arbeitsanschluss 40.2 ist in dem hier gezeigten Ausführungsbeispiel mit dem ersten Redundanzbremsdruckanschluss 8 verbunden, sodass der erste Arbeitsbremsdruck pA1 am ersten Redundanzbremsdruckanschluss 8 bereitgestellt wird und so auch als erster Redundanzbremsdruck pR1 fungiert. Der erste Redundanzbremsdruckanschluss 8 ist wie in Fig. 2 gezeigt mit dem Vorderachsmodulator 22 verbunden, sodass über die Betätigung der ersten Vorsteuereinheit 32 und der ersten Hauptventileinheit 34 die erste Redundanzebene B2 umgesetzt werden kann.

Zu diesem Zweck ist auch die zweite elektronische Steuereinheit 302 in die elektropneumatische Baueinheit 1 integriert, zum Bilden des sekundären Bremsmoduls 402. Die zweite elektronische Steuereinheit 302 kann in dem hier gezeigten Ausführungsbeispiel erste Vorsteuer-Schaltsignale S4, S5 an der ersten Vorsteuereinheit 32 bereitstellen, um insbesondere das erste Einlassventil 36 zum Schalten in die zweite in Fig. 3 nicht gezeigte Schaltstellung zu verbringen. Um den ersten Arbeitssteuerdruck pS1 zu entlüften, umfasst die erste Vorsteuereinheit 32 auch ein erstes Auslassventil 42. Das erste Auslassventil 42 ist wiederum als monostabiles 2/2-Wege-Ventil ausgebildet und umfasst einen ersten Auslassventilanschluss 42.1 und einen zweiten Auslassventilanschluss 42.2. In einer ersten in Fig. 3 gezeigten stabilen Schaltstellung sind der erste und der zweite Auslassventilanschluss 42.1, 42.2 pneumatisch verbunden, während sie im aktivierten Zustand des ersten Auslassventils 42 pneumatisch getrennt sind. Der erste Auslassventilanschluss 42.1 ist mit der ersten Steuerleitung 38 verbunden und der zweite Auslassventilanschluss 42.2 ist mit der Ventilhauptleitung 24 verbunden, in dem in Fig. 3 gezeigten Fall genauer gesagt mit dem ersten Ausfallbremsventil 16, genauer, dem zweiten Ausfallbremsventilanschluss 16.2. Da die Ventilhauptleitung 24 im normalen Betrieb des Fahrzeugs 200 typischerweise entlüftet sein soll, entweder wie in Fig. 3 gezeigt über das Bistabilventil 26, welches den zweiten Bistabilventilanschluss 26.2 mit dem dritten Bistabilventilanschluss 26.3 und damit mit der Entlüftung 3 verbindet, oder bei Aktivierung des ersten Ausfallbremsventils 16 über dieses, kann auch die erste Steuerleitung 38 über das erste Auslassventil 42 entlüftet werden.

An dieser Stelle zeigt sich auch der Unterschied der elektropneumatischen Baueinheit 1 gemäß der vorliegenden Erfindung zu einem herkömmlichen Zweikanal-Achsmodulator. Bei einem herkömmlichen Zweikanal-Achsmodulator ist der zweite Auslassventilanschluss 42.2 typischerweise entweder unmittelbar mit einer Entlüftung verbunden, oder über die Zwischenschaltung eines Backup-Ventils oder Redundanzventils, welches ähnlich wie das erste Ausfallbremsventil 16 ausgebildet sein kann, mit einem Redundanzanschluss, über den beispielsweise ein pneumatischer Redundanzdruck oder ein Anti-Compound-Druck eingesteuert werden kann und der im Normalbetrieb auch als Entlüftung fungiert. In dem in Fig. 3 gezeigten Ausführungsbeispiel der elektropneumatischen Baueinheit 1 allerdings ist zusätzlich das Bistabilventil 26 sowie der Druckbegrenzer 12 vorgesehen, über den permanent der Ausfallversorgungsdruck pAV an dem Ausfallversorgungsanschluss 10 anliegt. Die Entlüftung der ersten Steuerleitung 38 geschieht demnach nicht über den Ausfallversorgungsanschluss 10, sondern über die Entlüftung 3 des ersten Ausfallbremsventils 16 und/oder des Bistabilventils 26. Das erste Relaisventil 40 kann eine eigene Entlüftung aufweisen oder ebenfalls mit einer der Entlüftungen 3 des ersten Ausfallbremsventils 16 sowie des Bistabilventils 26 verbunden sein.

Die Arbeitsventilanordnung 15 umfasst ferner eine zweite elektromagnetische Vorsteuereinheit 44 sowie eine zweite Hauptventileinheit 45, die analog zu der ersten Vorsteuereinheit 32 und der ersten Hauptventileinheit 34 ausgebildet sind. Insofern umfasst auch die zweite Vorsteuereinheit 44 ein zweites Einlassventil 46 sowie ein zweites Auslassventil 52 und ein zweites Relaisventil 50. Wiederum ist das zweite Einlassventil 44 mit einem dritten und einem vierten Einlassventilanschluss 46.1, 46.2 verbunden, wobei der dritte Einlassventilanschluss 46.1 mit dem Vorratsanschluss 4 verbunden ist und der vierte Einlassventilanschluss 46.2 mit einer zweiten Steuerleitung 48, in die das zweite Einlassventil 46 einen zweiten Arbeitssteuerdruck pS2 aussteuert. Das zweite Relaisventil empfängt den zweiten Arbeitssteuerdruck pS2 in einem zweiten Relaisventil-Steueranschluss 50.3, empfängt Vorratsdruck pV an einem zweiten Relaisventil-Vorratsanschluss 50.1 und steuert einen zweiten Arbeitsbremsdruck pA2 an einem zweiten Relaisventil-Arbeitsanschluss 50.2 aus, der auch hier mit dem zweiten Redundanzbremsdruckanschluss 9 verbunden ist, sodass der zweite Arbeitsbremsdruck pA2 auch als zweiter Redundanzbremsdruck pR2 fungieren kann. Der zweite Redundanzbremsdruckanschluss 9 ist (vgl. Fig. 2) mit dem Hinterachsmodulator 230 verbunden, sodass über die zweite Vorsteuereinheit 44 und die zweite Hauptventileinheit 45 die erste Redundanzebene B2 in der elektronischen Aussteuerung umgesetzt werden kann. Das zweite Auslassventil 52 ist wiederum mit dem dritten Auslassventilanschluss 52.1 mit der zweiten Steuerleitung 48 verbunden und mit dem vierten Auslassventilanschluss 52.2 mit der Hauptventilleitung 24, sodass auch die zweite Steuerleitung 48 über die Ausfallsicherheitsventilanordnung 14 entlüftet werden kann. Zum Verbringen des zweiten Einlassventils 46 und des zweiten Auslassventils 52 in die jeweils nicht gezeigten aktivierten Schaltstellungen kann die zweite elektronische Steuereinheit 302 zweite Vorsteuer-Schaltsignale S6, S7 bereitstellen.

Im automatisierten Betrieb, insbesondere, wenn kein Fahrer vorhanden ist, sollte das Bistabilventil 26 in der ersten in Fig. 3 nicht gezeigten Schaltstellung sein, in der der erste Bistabilventilanschluss 26.1 mit dem zweiten Bistabilventilanschluss 26.2 verbunden ist, sodass grundsätzlich der Ausfallversorgungsdruck pAV durch das Bistabilventil 26 durchgesteuert ist und dann bevorzugt an dem zweiten Ausfallbremsventilanschluss 16.2 anliegt. Das erste Ausfallbremsventil 16 ist dann in der aktivierten in Fig. 3 nicht gezeigten Schaltstellung, sodass die Hauptventilleitung 24 mit der Entlüftung 3 verbunden ist. Kommt es nun zu einem Doppelfehler FD und fällt auch die zweite elektronische Steuereinheit 302 aus, kann diese nicht mehr die ersten und zweiten Vorsteuer-Schaltsignale S4, S5, S6, S7 bereitstellen, sodass das erste Einlassventil 36, das erste Auslassventil 42, das zweite Einlassventil 46, das zweite Auslassventil 52 jeweils in ihre monostabilen in Fig. 3 gezeigten Schaltstellungen zurückfallen. Auch das erste Ausfallbremsventil 16 fällt in die in Fig. 3 gezeigte stabile Schaltstellung, in der der erste Ausfallbremsventilanschluss 16.1 mit dem zweiten Ausfallbremsventilanschluss 16.2 verbunden ist. Da auch die ersten und zweiten Auslassventile 42, 52 in ihren geöffneten Schaltstellungen sind, kann der durch das erste Ausfallbremsventil 16 ausgesteuerte Ausfallversorgungsdruck pAV durch die Ventilhauptleitung 24 durchgesteuert werden und über die ersten und zweiten Entlüftungsventile 42, 52 in die ersten und zweiten Steuerleitungen 38, 48 eingesteuert werden und liegt dann an den ersten und zweiten Relaisventilsteueranschlüssen 40.3, 50.3 an. Die ersten und zweiten Relaisventile 40, 50 volumenverstärken dann diesen Druck, nämlich in diesem Fall ein erster bzw. zweiter Redundanzsteuerdruck pRS1, pRS2, und steuern diesen jeweils als ersten und zweiten Redundanzbremsdruck pR1, pR2 an den ersten und zweiten Redundanzbremsdruckanschlüssen 8, 9 aus. Auf diese Weise kann dann das Fahrzeug 200 sicher gebremst werden.

Das heißt, im Unterschied zu dem ersten Ausführungsbeispiel (Fig. 1) ist die Ausfallsicherheitsventilanordnung 14 in dem hier gezeigten Ausführungsbeispiel (Fig. 3) nicht unmittelbar mit dem ersten oder zweiten Redundanzbremsdruckanschluss 8, 9 verbunden, sondern mit dem ersten Relaisventil-Steueranschluss 40.3, der als erster Redundanzsteueranschluss 40.4 fungiert und dem zweiten Relaisventil-Steueranschluss 50.3, der als zweiter Redundanzsteueranschluss 50.4 fungiert.

Es kann aber auch vorgesehen sein, dass das erste Relaisventil 40 und/oder das zweite Relaisventil 50 Teil der Ausfallsicherheitsventilanordnung 40 sind.

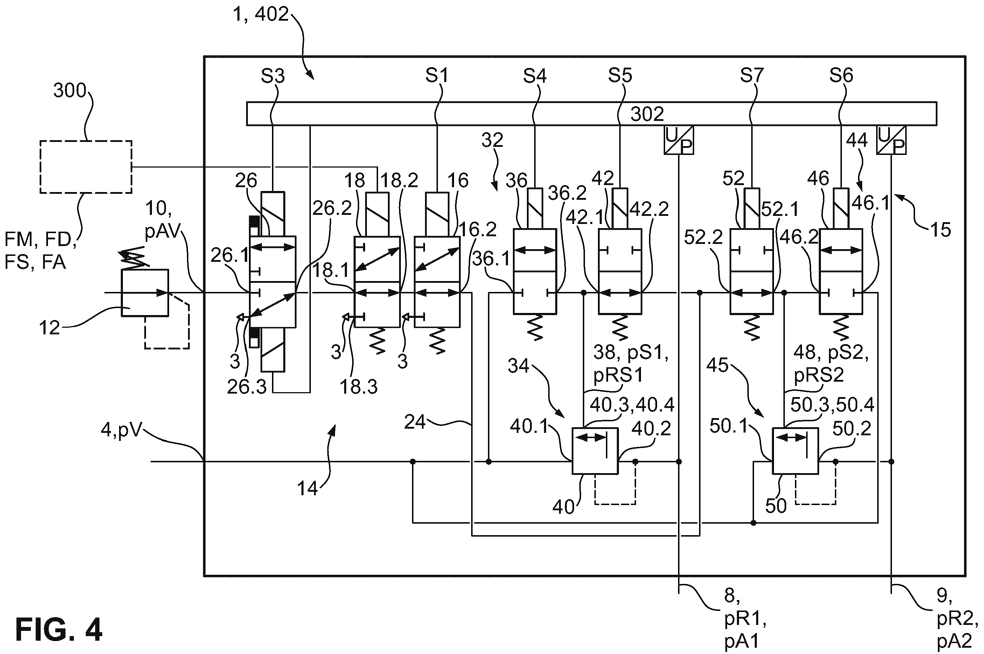

Ein drittes Ausführungsbeispiel der elektropneumatischen Baueinheit 1 ist in Fig. 4 gezeigt. Gleiche und ähnliche Elemente sind mit denselben Bezugszeichen wir in den vorherigen Ausführungsbeispielen bezeichnet, sodass vollumfänglich auf die obige Beschreibung Bezug genommen wird. Das dritte Ausführungsbeispiel (Fig. 4) basiert auf dem zweiten Ausführungsbeispiel (Fig. 3) und im Folgenden werden insbesondere die Unterschiede hervorgehoben.

Im Unterschied zum zweiten Ausführungsbeispiel (Fig. 3) ist in dem dritten Ausführungsbeispiel (Fig. 4) das zweite Ausfallsbremsventil 18, wie mit Bezug auf Fig. 1 bereits beschrieben, vorgesehen. Es ist mit dem ersten Ausfallbremsventil 16 und dem Bistabilventil 26 pneumatisch in Reihe geschaltet. Es ist zwischen dem ersten Ausfallbremsventil 16 und dem Bistabilventil 26 angeordnet, wobei die Reihenfolge dieser Ventile auch abweichend gestaltet werden kann, insbesondere, um einen möglichst kleinen Bauraum zu realisieren.

Das zweite Ausfallbremsventil 18 wird wie mit Bezug auf Fig. 1 bereits beschrieben von der elektronischen Steuereinheit 300 der zentralen Steuereinheit 400 gesteuert. Insofern ist bei dem dritten Ausführungsbeispiel im Vergleich zum zweiten Ausführungsbeispiel die Sicherheit erhöht, da sowohl die elektronische Steuereinheit 300 als auch die elektronische Steuereinheit 302 ausfallen müssen, um die Aussteuerung des ersten Redundanzbremsdrucks pR1 basierend auf dem Ausfallversorgungsdruck pAV zu bewirken.

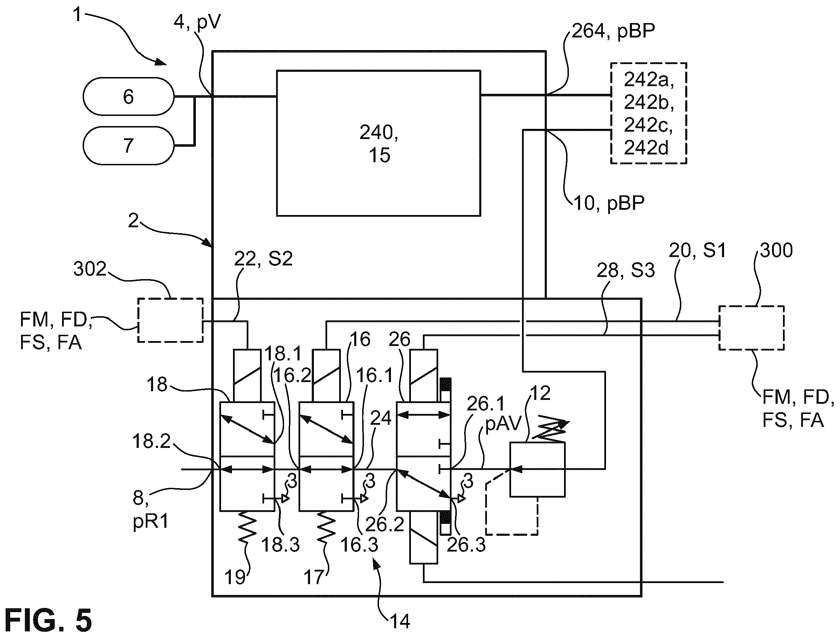

Im vierten Ausführungsbeispiel (Fig. 5) ist eine Variante der elektropneumatischen Baueinheit dargestellt, die im Wesentlichen auf dem Ausführungsbeispiel der Fig. 1 basiert. Gleiche und ähnliche Elemente sind mit denselben Bezugszeichen wir in den vorherigen Ausführungsbeispielen bezeichnet, sodass vollumfänglich auf die obige Beschreibung Bezug genommen wird. Im Folgenden werden insbesondere die Unterschiede hervorgehoben.

In dem vierten Ausführungsbeispiel (Fig. 5) ist die elektropneumatische Baueinheit 1 mit einer Parkbremseinheit 240 integriert ausgebildet. Der Vorratsanschluss 4 dient somit auch dazu, die Arbeitsventileinheit 15, die hier in grundsätzlich bekannter Weise zur Aussteuerung des Parkbremsdrucks pBP dient, mit Vorratsdruck pV zu versorgen. Dazu sind sowohl der erste Druckluftvorrat 6 als auch der zweite Druckluftvorrat 7 an den Vorratsanschluss 4 angeschlossen, wie auch in Fig. 2 gezeigt.

Die Parkbremseinheit weist einen Federspeicheranschluss 264 auf, an den ein oder mehr Federspeicherbremszylinder angeschlossen werden können. In dem in Fig. 2 gezeigten Ausführungsbeispiel des elektronisch steuerbaren pneumatischen Bremssystem 204 sind alle vier Federspeicherbremszylinder 242a, 242b, 242c, 242d an diesen angeschlossen. Auch der Ausfallversorgungsanschluss 10 ist mit den Federspeicherbremszylindern 242a, 242b, 242c, 242d verbunden und empfängt den Parkbremsdruck pBP. Dem Ausfallversorgungsanschluss 10 nachgeschaltet ist hier noch der Druckbegrenzer 12, auch wenn dies nicht zwingend erforderlich ist, wenn der Parkbremsdruck pBP bereits ausreichend gegenüber dem Vorratsdruck pV begrenzt ist. Der Ausfallversorgungsanschluss 10 ist hier außerhalb des Gehäuses 2 mit den Federspeicherbremszylindern 242a, 242b, 242c, 242d. Bei einer integrierten Anordnung wie in Fig. 5 gezeigt bietet es sich auch an, den Parkbremsdruck pBP intern zu übergeben. In diesem Fall könnte der Ausfallversorgungsanschluss 10 unmittelbar stromabwärts der Arbeitsventileinheit 15 angeordnet sein.

Trotz der Integration mit der Parkbremseinheit 240 wird das erste Ausfallbremsventil 16 und das Bistabilventil 26 von der elektronischen Steuereinheit 300 und das zweite Ausfallbremsventil 18 von der elektronischen Steuereinheit 302 angesteuert. Für den Fall, dass die Parkbremseinheit 240 über eine eigene Intelligenz verfügt ist bevorzugt, dass wenigstens das Bistabilventil 26 und/oder das erste Ausfallbremsventil 16 und/oder das zweite Ausfallbremsventil 18 von der Intelligenz (elektronischen Steuereinheit) der Parkbremseinheit 240 angesteuert wird.

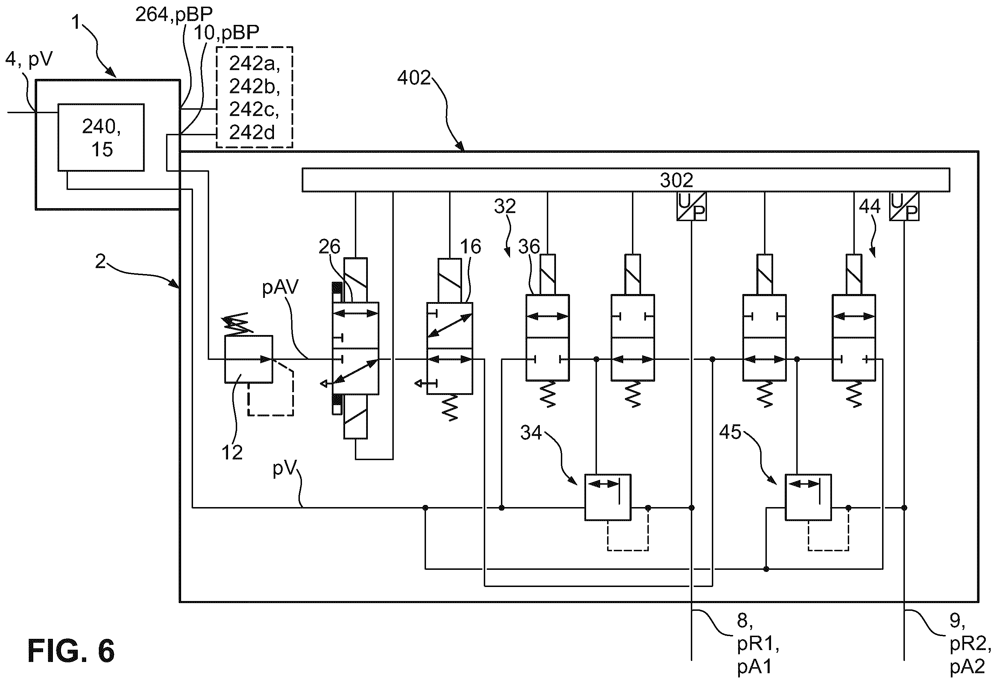

In einem fünften Ausführungsbeispiel (Fig. 6) sind im Wesentlichen die Ausführungsformen 2 und 4 gemäß den Fig. 3 und 5 kombiniert. Die elektropneumatische Baueinheit 1 umfasst hier sowohl die Parkbremseinheit 240 nach dem Vorbild der Fig. 5 und das sekundäre Bremsmodul 402 nach dem Vorbild der Fig. 3. Der Vorratsanschluss 4 kann wiederum mit dem ersten Druckluftvorrat 6 und dem zweiten Druckluftvorrat 7 verbunden sein, auch wenn dies in Fig. 6 nicht gezeigt ist. Der Vorratsdruck pV wird dann innerhalb der elektropneumatischen Baueinheit 1 übergeben und der ersten Vorsteuerventileinheit 32, der zweiten Vorsteuerventileinheit 44, der ersten Hauptventileinheit 34 und der zweiten Hauptventileinheit 45 bereitgestellt. Auch der Parkbremsdruck pBP kann bevorzugt wie mit Bezug auf Fig. 5 bereits beschrieben auch intern innerhalb des Gehäuses 2 übergeben werden. Auf diese Weise ist ein vollintegriertes Modul geschaffen, bei dem Teile, insbesondere Ventile, vorteilhaft eingespart werden können.

### BEZUGSZEICHENLISTE (TEIL DER BESCHREIBUNG)

- 1: Elektropneumatische Baueinheit
- 2: Gehäuse
- 4: Vorratsanschluss
- 6: erster Druckluftvorrat
- 8: erster Redundanzbremsdruckanschluss
- 9: zweiter Redundanzbremsdruckanschluss
- 10: Ausfallversorgungsanschluss
- 12: Druckbegrenzer
- 14: Ausfallsicherheitsventilanordnung
- 15: Arbeitsventilanordnung
- 16: erstes monostabiles Ausfallbremsventil
- 16.1: erster Ausfallbremsventilanschluss
- 16.2: zweiter Ausfallbremsventilanschluss
- 16.3: dritter Ausfallbremsventilanschluss
- 17: erste Rückstellfeder
- 18: zweites monostabiles Ausfallbremsventil
- 18.1: vierter Ausfallbremsventilanschluss
- 18.2: fünfter Ausfallbremsventilanschluss
- 18.3: sechster Ausfallbremsventilanschluss
- 19: zweite Rückstellfeder
- 20: erste Steuerleitung
- 22: zweite Steuerleitung
- 24: Ventilhauptleitung
- 26: Bistabilventil
- 26.1: erster Bistabilventilanschluss
- 26.2: zweiter Bistabilventilanschluss
- 26.3: dritter Bistabilventilanschluss
- 28: Bistabilventilsignalleitung
- 32: erste elektromagnetische Vorsteuereinheit
- 34: erste Hauptventileinheit
- 36: erstes Einlassventil
- 36.1: erster Einlassventilanschluss
- 36.2: zweiter Einlassventilanschluss
- 38: erste Steuerleitung
- 40: erstes Relaisventil
- 40.1: erster Relaisventil-Vorratsanschluss
- 40.2: erster Relaisventil-Arbeitsanschluss
- 40.3: erster Relaisventil-Steueranschluss
- 40.4: erster Redundanzsteueranschluss
- 42: erstes Auslassventil
- 42.1: erster Auslassventilanschluss
- 42.2: zweiter Auslassventilanschluss
- 44: zweite elektromagnetische Vorsteuereinheit
- 45: zweite Hauptventileinheit
- 46: zweites Einlassventil
- 46.1: dritter Einlassventilanschluss
- 46.2: vierter Einlassventilanschluss
- 48: zweite Steuerleitung
- 50: zweites Relaisventil
- 50.1: zweiter Relaisventil-Vorratsanschluss
- 50.2: zweiter Relaisventil-Arbeitsanschluss
- 50.3: zweiter Relaisventil-Steueranschluss
- 50.4: zweiter Redundanzsteueranschluss
- 52: zweites Auslassventil
- 52.1: dritter Auslassventilanschluss
- 52.2: vierter Auslassventilanschluss
- 200: Fahrzeug
- 202: Nutzfahrzeug
- 204: elektronisch steuerbares pneumatisches Bremssystem
- 206: Fahrzeug-BUS
- 208: Einheit für autonomes Fahren
- 210: erste Spannungsquelle
- 212: zweite Spannungsquelle
- 220: Vorderachsmodulator
- 222: Vorderachs-Vorratsanschluss
- 224: Vorderachssignalleitung
- 226: erstes ABS-Ventil
- 227: zweites ABS-Ventil
- 228a: erster Vorderachsbetriebsbremsaktuator
- 228b: zweiter Vorderachsbetriebsbremsaktuator
- 230: Hinterachsmodulator
- 232a: erster Hinterachsbetriebsbremsaktuator
- 232b: zweiter Hinterachsbetriebsbremsaktuator
- 232c: dritter Hinterachsbetriebsbremsaktuator
- 232d: vierter Hinterachsbetriebsbremsaktuator
- 240: Parkbremseinheit
- 242a: erster Federspeicherbremszylinder
- 242b: zweiter Federspeicherbremszylinder
- 242c: dritter Federspeicherbremszylinder
- 242d: vierter Federspeicherbremszylinder
- 250: Anhängersteuereinheit
- 251: Anhängerbremsdruckanschluss
- 252: Anhängersignalleitung
- 253: Anhängerredundanzanschluss
- 254: erstes Wechselventil
- 256: Vorderachsredundanzanschluss
- 258: Hinterachsredundanzanschluss
- 260: zweites Wechselventil
- 262: Fußbremspedal
- 264: Federspeicheranschluss
- 300: erste elektronische Steuereinheit
- 302: zweite elektronische Steuereinheit
- 400: zentrale Steuereinheit
- 402: sekundäres Bremsmodul
- A1: erste Achse
- A2: zweite Achse
- B1: Betriebsebene
- B2: erste Redundanzebene
- B3: zweite Redundanzebene
- FD: Doppelfehler
- FM: Mehrfachfehler
- FS: Stromausfall
- FA: Ausnahmefehler
- pA: Arbeitsdruck
- pBF: Fußbremsdruck
- pBHA: Hinterachsbetriebsbremsdruck
- pBP: Parkbremsdruck
- pBT: Anhängerbremsdruck
- pBVA: Vorderachsbetriebsbremsdruck
- pR1: erster Redundanzbremsdruck
- pR2: zweiter Redundanzbremsdruck
- pRS1: erster Redundanzsteuerdruck
- pRS2: zweiter Redundanzsteuerdruck
- pS1: erster Arbeitssteuerdruck
- pS2: zweiter Arbeitssteuerdruck
- pV: Vorratsdruck
- pAV: Ausfallversorgungsdruck
- HA1: erste Hinterachse
- HA2: zweite Hinterachse
- S1: erstes Schaltsignal
- S2: zweites Schaltsignal
- S3: drittes Schaltsignal
- S4: erstes Vorsteuer-Schaltsignal
- S5: zweites Vorsteuer-Schaltsignal
- S6: drittes Vorsteuer-Schaltsignal
- S7: viertes Vorsteuer-Schaltsignal
- SBA: Bremsanforderungssignal
- SBT: Anhängerbremssignal
- SBV: Vorderachsbremssignale
- VA: Vorderachse

## Patentansprüche

1. Elektropneumatische Baueinheit (1) für ein elektronisch steuerbares pneumatisches Bremssystem (204) für ein Fahrzeug (200), insbesondere ein Nutzfahrzeug (202), mit
einem Vorratsanschluss (4) zum Empfangen eines Vorratsdrucks (pV) von wenigstens einem ersten Druckluftvorrat (6);
wenigsten einem ersten Redundanzbremsdruckanschluss (8) zum Bereitstellen eines ersten Redundanzbremsdrucks (pR1) für eine erste Achse (A1) des Fahrzeugs (200) und/oder einen Anhänger des Fahrzeugs (200),
**gekennzeichnet durch** einen Ausfallversorgungsanschluss (10) zum Bereitstellen eines Ausfallversorgungsdrucks (pAV), der gegenüber dem Vorratsdruck (pV) begrenzt und geringer als dieser ist, und
eine mit dem Ausfallversorgungsanschluss (10) und dem Redundanzbremsdruckanschluss (8) oder wenigstens einem ersten Redundanzsteueranschluss (40.4) verbundene Ausfallsicherheitsventilanordnung (14), die wenigstens ein als monostabiles Ventil ausgebildetes erstes Ausfallbremsventil (16) aufweist, welches in einem Fehlerfall schaltbar ist, um basierend auf dem Ausfallversorgungsdruck (pAV) den ersten Redundanzbremsdruck (pR1) an dem ersten Redundanzbremsdruckanschluss (8) oder wenigstens einen ersten Redundanzsteuerdruck (pRS1) an dem ersten Redundanzsteueranschluss (40.4) auszusteuern.

2. Elektropneumatische Baueinheit (1) nach Anspruch 1, wobei der Ausfallversorgungsdruck (pAV) aus dem ersten Druckluftvorrat (6), einem weiteren Druckluftvorrat (7) oder einem Federspeicherbremszylinder (242a, 242b, 242c, 242d) stammt.

3. Elektropneumatische Baueinheit (1) nach einem der vorstehenden Ansprüche, wobei das erste Ausfallbremsventil (16) ein 3/2-Wege-Ventil ist mit einem den Ausfallversorgungsdruck (pAV) empfangenden ersten Ausfallbremsventilanschluss (16.1), einem den ersten Redundanzbremsdruck (pR1) oder den ersten Redundanzsteuerdruck (pRS1) aussteuernden zweiten Ausfallbremsventilanschluss (16.2) und einen mit einer Entlüftung (3) verbundenen dritten Ausfallbremsventilanschluss (16.3), wobei in einer nicht aktivierten Schaltstellung der erste Ausfallbremsventilanschluss (16.1) mit dem zweiten Ausfallbremsventilanschluss (16.2) verbunden ist, und in einer aktivierten Schaltstellung der zweite Ausfallbremsventilanschluss (16.2) mit dem dritten Ausfallbremsventilanschluss (16.3) verbunden ist.

4. Elektropneumatische Baueinheit (1) nach einem der vorstehenden Ansprüche, wobei dem Ausfallversorgungsanschluss (10) ein Druckbegrenzer (12) vorgeschaltet ist oder die elektropneumatische Baueinheit (2) einen Druckbegrenzer (12) aufweist zum Begrenzen des am Ausfallversorgungsanschluss (10) empfangenen Drucks.

5. Elektropneumatische Baueinheit (1) nach einem der vorstehenden Ansprüche, wobei die Ausfallsicherheitsventilanordnung (14) ein elektromagnetisches Bistabilventil (26) aufweist, welches mit dem ersten Ausfallbremsventil (16) pneumatisch in Reihe geschaltet ist.

6. Elektropneumatische Baueinheit (1) nach Anspruch 5, wobei das Bistabilventil (26) einen den Ausfallversorgungsdruck (pAV) empfangenden ersten Bistabilventilanschluss (26.1), einen mit dem ersten Ausfallbremsventil (16) verbundenen zweiten Bistabilventilanschluss (26.2) und einen mit einer Entlüftung (3) verbundenen dritten Bistabilventilanschluss (26.3) aufweist.

7. Elektropneumatische Baueinheit (1) nach einem der vorstehenden Ansprüche, aufweisend eine Arbeitsventilanordnung (15), die mit dem Vorratsanschluss (4) verbunden ist und von diesem Vorratsdruck (pV) empfängt und schaltbar ist, um an dem ersten Redundanzbremsdruckanschluss (8) den ersten Redundanzbremsdruck (pR1) auszusteuern oder an einem Arbeitsanschluss (16) der elektropneumatischen Baueinheit (1) einen Arbeitsdruck (pA) auszusteuern, sowie eine elektronische Steuereinheit (302) zum Ansteuern der Arbeitsventilanordnung (14).

8. Elektropneumatische Baueinheit (1) nach Anspruch 7, wobei die elektronische Steuereinheit (302) das erste Ausfallbremsventil (16) ansteuert.

9. Elektropneumatische Baueinheit (1) nach Anspruch 6 und 7, wobei die elektronische Steuereinheit (302) das Bistabilventil (26) ansteuert.

10. Elektropneumatische Baueinheit (1) nach einem der vorstehenden Ansprüche, wobei die Ausfallsicherheitsventilanordnung (14) ein als monostabiles Ventil ausgebildetes zweites Ausfallbremsventil (18) aufweist, welches mit dem ersten Ausfallbremsventil (16) pneumatisch in Reihe geschaltet ist

11. Elektropneumatische Baueinheit (1) nach Anspruch 10, wobei das zweite Ausfallbremsventil (18) von einer weiteren elektronischen Steuereinheit (300) angesteuert wird.

12. Elektropneumatische Baueinheit (1) nach Anspruch 7, wobei die Arbeitsventilanordnung (15) wenigstens eine erste elektromagnetische Vorsteuereinheit (32) und eine erste Hauptventileinheit (34) aufweist, wobei die erste Vorsteuereinheit (32) mit dem Vorratsanschluss (4) verbunden ist und in Abhängigkeit von ersten Vorsteuer-Schaltsignalen (S4, S5) der elektronischen Steuereinheit (302) einen ersten Arbeitssteuerdruck (pS1) an der ersten Hauptventileinheit (34) aussteuert, wobei die erste Hauptventileinheit (34) mit dem Vorratsanschluss (4) verbunden ist und in Abhängigkeit von dem empfangenen ersten Arbeitssteuerdruck (pS1) einen ersten Arbeitsbremsdruck (pA1) aussteuert.

13. Elektropneumatische Baueinheit (1) nach Anspruch 12, wobei die Arbeitsventilanordnung (15) eine zweite elektromagnetische Vorsteuereinheit (44) und eine zweite Hauptventileinheit (45) aufweist, wobei die zweite Vorsteuereinheit (44) mit dem Vorratsanschluss (4) verbunden ist und in Abhängigkeit von zweiten Vorsteuer-Schaltsignalen (S6, S7) der elektronischen Steuereinheit (302) einen zweiten Arbeitssteuerdruck (pS2) an der zweiten Hauptventileinheit (45) aussteuert, wobei die zweite Hauptventileinheit (45) mit dem Vorratsanschluss (4) verbunden ist und in Abhängigkeit von dem empfangenen zweiten Arbeitssteuerdruck (pS2) einen zweiten Arbeitsbremsdruck (pA2) aussteuert.

14. Elektronisch steuerbares pneumatisches Bremssystem (204) für ein Fahrzeug (200), insbesondere ein Nutzfahrzeug (202), mit
Vorderachsmodulator (220) zum Bereitstellen eines Vorderachsbetriebsbremsdrucks (pBVA) an einem ersten Vorderachsbetriebsbremsaktuator (228a) und einem zweiten Vorderachsbetriebsbremsaktuator (228a) an einer Vorderachse (VA) des Fahrzeugs (200); und
einem Hinterachsmodulator (230) zum Bereitstellen eines Hinterachsbetriebsbremsdrucks (pBHA) an wenigstens einem ersten Hinterachsbetriebsbremsaktuator (232a) und einem zweiten Hinterachsbetriebsbremsaktuator (232b) an einer Hinterachse (HA1) des Fahrzeugs (200); und
einer elektropneumatischen Baueinheit (1) nach einem der Ansprüche 1 bis 13, wobei der erste Redundanzbremsdruckanschluss (8) mit einem Vorderachsredundanzanschluss (256) des Vorderachsmodulators (220) und/oder einem Hinterachsredundanzanschluss (258) des Hinterachsmodulators (230) verbunden ist, um eine redundante Aussteuerung des Vorderachsbetriebsbremsdrucks (pBVA) und/oder Hinterachsbetriebsbremsdrucks (pBHA) zu veranlassen.

15. Elektronisch steuerbares pneumatisches Bremssystem (204) nach Anspruch 14, aufweisend eine zentrale Steuereinheit (400), die Vorderachsbremssignale (SBV) an dem Vorderachsmodulator (220) bereitstellt, um eine elektronische Aussteuerung des Vorderachsbetriebsbremsdrucks (pBVA) zu veranlassen, und die Hinterachsbremssignale (SBH) an dem Hinterachsmodulator (230) bereitstellt, um eine elektronische Aussteuerung des Hinterachsbetriebsbremsdrucks (pBHA) zu veranlassen, wobei die zentrale Steuereinheit (400) das erste Ausfallbremsventil (16) ansteuert.

16. Elektronisch steuerbares pneumatisches Bremssystem (204) nach Anspruch 14 oder 15, wobei die elektropneumatische Baueinheit (1) ein sekundäres Bremsmodul (402) des elektronisch steuerbaren pneumatischen Bremssystems (204) ist, und dazu ausgebildet ist, für den Fall, dass die zentrale Steuereinheit (400) verhindert ist, den Vorderachsbetriebsbremsdruck (pBVA) und/oder Hinterachsbetriebsbremsdruck (pBHA) elektronisch auszusteuern, eine redundante Aussteuerung des Vorderachsbetriebsbremsdrucks (pBVA) und/oder Hinterachsbetriebsbremsdrucks (pBHA) zu veranlassen.

17. Elektronisch steuerbares pneumatisches Bremssystem (204) nach einem der Ansprüche 14 bis 16, aufweisend eine Parkbremseinheit (240) zum Bereitstellen eines Parkbremsdrucks (pBP) an einem ersten Federspeicherbremszylinder (242a) und einem zweiten Federspeicherbremszylinder (242b) an der Hinterachse (HA1) des Fahrzeugs (200), wobei der Ausfallversorgungsanschluss (10) mit dem ersten Federspeicherbremszylinder (242a) und/oder dem zweiten Federspeicherbremszylinder (242b) verbunden ist, um den Parkbremsdruck (pBP) oder einen davon abgeleiteten Druck als Ausfallversorgungsdruck (pAV) zu empfangen.

18. Elektronisch steuerbares pneumatisches Bremssystem (204) nach Anspruch 17, wobei die elektropneumatische Baueinheit (1) mit der Parkbremseinheit (240) zu einer Baueinheit integriert ist.

19. Elektronisch steuerbares pneumatisches Bremssystem (204) nach einem der Ansprüche 14 bis 18, aufweisend eine Anhängersteuereinheit (250) zum Bereitstellen eines Anhängerbremsdrucks (pBT) an einem Anhängerbremsdruckanschluss (251), wobei der erste Redundanzbremsdruckanschluss (8) oder ein weiterer Redundanzbremsdruckanschluss (9) der elektropneumatischen Baueinheit (1) mit einem Anhängerredundanzanschluss (253) des Anhängersteuerventils (250) verbunden ist, um eine redundante Aussteuerung des Anhängerbremsdrucks (pBT) zu veranlassen.

20. Verfahren zum Steuern eines elektronisch steuerbaren pneumatischen Bremssystems (204) nach einem der Ansprüche 14 bis 19, umfassend die Schritte:
- Bereitstellen eines Vorratsdrucks (pV) an einem Vorratsanschluss (4) einer elektropneumatischen Baueinheit (1);
- Bereitstellen eines Ausfallversorgungsdrucks (pAV), der gegenüber dem Vorratsdruck (pV) begrenzt und geringer als dieser ist an einem Ausfallversorgungsanschluss (10) der elektropneumatischen Baueinheit (1), wenigstens während das Fahrzeug (200) fährt; und
- Aussperren des Ausfallversorgungsdrucks (pAV) im fehlerfreien Zustand des elektronisch steuerbaren pneumatischen Bremssystems (200).

21. Verfahren nach Anspruch 20, umfassend die Schritte:
Im Falle eines Fehlers (FM, FD, FS, FA) des elektronisch steuerbaren Bremssystems (204):
- Stromlosschalten eines ersten Ausfallbremsventils (16) der elektropneumatischen Baueinheit (1); und
- Durchsteuern des Ausfallversorgungsdrucks (pAV) durch das erste Ausfallbremsventil (16) zum Auslösen einer redundanten Bremsung des Fahrzeugs (200) mittels Vorderachsbetriebsbremsaktuatoren (228a, 228b) und/oder Hinterachsbetriebsbremsaktuatoren (232a, 232b, 232c, 232d).

22. Fahrtzeug (200), insbesondere Nutzfahrzeug (202) mit einer Vorderachs (VA), wenigstens einer ersten Hinterachse (HA1) und einem elektronisch steuerbaren pneumatischen Bremssystem (204) nach einem der Ansprüche 14 bis 19, welches vorzugsweise zur Durchführung eines Verfahrens nach einem der Ansprüche 20 bis 21 ausgebildet ist.

## Claims

1. Electropneumatic assembly (1) for an electronically controllable pneumatic brake system (204) for a vehicle (200), in particular a commercial vehicle (202), comprising
a supply connection (4) for receiving a supply pressure (pV) from at least one first compressed air supply (6);
at least one first redundancy brake pressure connection (8) for providing a first redundancy brake pressure (pR1) for a first axle (A1) of the vehicle (200) and/or a trailer of the vehicle (200),
**characterized by**
a failure supply connection (10) for providing a failure supply pressure (pAV) which is limited with respect to and lower than the supply pressure (pV), and
a fail-safe valve arrangement (14) which is connected to the failure supply connection (10) and the redundancy brake pressure connection (8) or at least one first redundancy control connection (40.4), which failure valve arrangement comprises at least one first failure brake valve (16) which is designed as a monostable valve and can be switched in the event of a fault in order to deliver the first redundancy brake pressure (pR1) at the first redundancy brake pressure connection (8) or at least one first redundancy control pressure (pRS1) at the first redundancy control connection (40.4) on the basis of the failure supply pressure (pAV).

2. Electropneumatic assembly (1) according to claim 1, wherein the failure supply pressure (pAV) originates from the first compressed air supply (6), a further compressed air supply (7) or a spring brake actuator (242a, 242b, 242c, 242d).

3. Electropneumatic assembly (1) according to any of the preceding claims, wherein the first failure brake valve (16) is a 3/2-way valve comprising a first failure brake valve connection (16.1) receiving the failure supply pressure (pAV), a second failure brake valve connection (16.2) setting the first redundancy brake pressure (pR1) or the first redundancy control pressure (pRS1), and a third failure brake valve connection (16.3) connected to a vent (3), wherein, in a non-activated switching position, the first failure brake valve connection (16.1) is connected to the second failure brake valve connection (16.2), and, in an activated switching position, the second failure brake valve connection (16.2) is connected to the third failure brake valve connection (16.3).

4. Electropneumatic assembly (1) according to any of the preceding claims, wherein a pressure limiter (12) is connected upstream of the failure supply connection (10), or the electropneumatic assembly (2) comprises a pressure limiter (12) for limiting the pressure received at the failure supply connection (10).

5. Electropneumatic assembly (1) according to any of the preceding claims, wherein the fail-safe valve arrangement (14) comprises an electromagnetic bistable valve (26) which is pneumatically connected in series to the first failure brake valve (16).

6. Electropneumatic assembly (1) according to claim 5, wherein the bistable valve (26) comprises a first bistable valve connection (26.1) receiving the failure supply pressure (pAV), a second bistable valve connection (26.2) connected to the first failure brake valve (16) and a third bistable valve connection (26.3) connected to a vent (3).

7. Electropneumatic assembly (1) according to any of the preceding claims, comprising a working valve arrangement (15) which is connected to the supply connection (4) and receives supply pressure (pV) therefrom and is switchable in order to control the first redundancy brake pressure (pR1) at the first redundancy brake pressure connection (8) or to control a working pressure (pA) at a working connection (16) of the electropneumatic assembly (1), and comprising an electronic control unit (302) for controlling the working valve arrangement (14).

8. Electropneumatic assembly (1) according to claim 7, wherein the electronic control unit (302) controls the first failure brake valve (16).

9. Electropneumatic assembly (1) according to claim 6 and 7, wherein the electronic control unit (302) controls the bistable valve (26).

10. Electropneumatic assembly (1) according to any of the preceding claims, wherein the fail-safe valve arrangement (14) comprises a second failure valve (18) designed as a monostable valve, which is pneumatically connected in series with the first failure valve (16)

11. Electropneumatic assembly (1) according to claim 10, wherein the second failure brake valve (18) is controlled by a further electronic control unit (300).

12. Electropneumatic assembly (1) according to claim 7, wherein the working valve arrangement (15) comprises at least a first electromagnetic pilot control unit (32) and a first main valve unit (34), wherein the first pilot control unit (32) is connected to the supply connection (4) and, depending on first pilot control switching signals (S4, S5) from the electronic control unit (302), sets a first working control pressure (pS1) at the first main valve unit (34), wherein the first main valve unit (34) is connected to the supply connection (4) and, depending on the received first working control pressure (pS1), sets a first working brake pressure (pA1).

13. Electropneumatic assembly (1) according to claim 12, wherein the working valve arrangement (15) comprises a second electromagnetic pilot control unit (44) and a second main valve unit (45), wherein the second pilot control unit (44) is connected to the supply connection (4) and, depending on second pilot control switching signals (S6, S7) from the electronic control unit (302), sets a second working control pressure (pS2) at the second main valve unit (45), wherein the second main valve unit (45) is connected to the supply connection (4) and, depending on the received second working control pressure (pS2), sets a second working brake pressure (pA2).

14. Electronically controllable pneumatic brake system (204) for a vehicle (200), in particular a commercial vehicle (202), comprising
a front axle modulator (220) for providing a front axle service brake pressure (pBVA) to a first front axle service brake actuator (228a) and a second front axle service brake actuator (228a) on a front axle (VA) of the vehicle (200); and
a rear axle modulator (230) for providing a rear axle service brake pressure (pBHA) to at least a first rear axle service brake actuator (232a) and a second rear axle service brake actuator (232b) on a rear axle (HA1) of the vehicle (200); and
an electropneumatic assembly (1) according to any of claims 1 to 13, wherein the first redundancy brake pressure connection (8) is connected to a front axle redundancy connection (256) of the front axle modulator (220) and/or to a rear axle redundancy connection (258) of the rear axle modulator (230) in order to initiate redundant setting of the front axle service brake pressure (pBVA) and/or rear axle service brake pressure (pBHA).

15. Electronically controllable pneumatic brake system (204) according to claim 14, comprising a central control unit (400) which provides front axle brake signals (SBV) to the front axle modulator (220) in order to initiate electronic setting of the front axle service brake pressure (pBVA), and which provides the rear axle brake signals (SBH) to the rear axle modulator (230) in order to initiate electronic setting of the rear axle service brake pressure (pBHA), wherein the central control unit (400) controls the first failure brake valve (16).

16. Electronically controllable pneumatic brake system (204) according to either claim 14 or claim 15, wherein the electropneumatic assembly (1) is a secondary brake module (402) of the electronically controllable pneumatic brake system (204) and is designed to initiate redundant setting of the front axle service brake pressure (pBVA) and/or rear axle service brake pressure (pBHA) in the event of the central control unit (400) being prevented from electronically delivering the front axle service brake pressure (pBVA) and/or rear axle service brake pressure (pBHA).

17. Electronically controllable pneumatic brake system (204) according to any of claims 14 to 16, comprising a parking brake unit (240) for providing a parking brake pressure (pBP) to a first spring brake actuator (242a) and a second spring brake actuator (242b) on the rear axle (HA1) of the vehicle (200), wherein the failure supply connection (10) is connected to the first spring brake actuator (242a) and/or the second spring brake actuator (242b) in order to receive the parking brake pressure (pBP) or a pressure derived therefrom as a failure supply pressure (pAV).

18. Electronically controllable pneumatic brake system (204) according to claim 17, wherein the electropneumatic assembly (1) is integrated with the parking brake unit (240) to form a single assembly.

19. Electronically controllable pneumatic brake system (204) according to any of claims 14 to 18, comprising a trailer control unit (250) for providing a trailer brake pressure (pBT) to a trailer brake pressure connection (251), wherein the first redundancy brake pressure connection (8) or a further redundancy brake pressure connection (9) of the electropneumatic assembly (1) is connected to a trailer redundancy connection (253) of the trailer control valve (250) in order to initiate redundant setting of the trailer brake pressure (pBT).

20. Method for controlling an electronically controllable pneumatic brake system (204) according to any of claims 14 to 19, comprising the steps of:
- providing a supply pressure (pV) at a supply connection (4) of an electropneumatic assembly (1);
- providing a failure supply pressure (pAV), which is limited to and lower than the supply pressure (pV), at a failure supply connection (10) of the electropneumatic assembly (1), at least while the vehicle (200) is traveling; and
- locking out the failure supply pressure (pAV) in the fault-free state of the electronically controllable pneumatic brake system (200).

21. Method according to claim 20, comprising the steps of:
in case of a fault (FM, FD, FS, FA) of the electronically controllable brake system (204):
- de-energizing a first failure brake valve (16) of the electropneumatic assembly (1); and
- passing the failure supply pressure (pAV) through the first failure brake valve (16) to trigger redundant braking of the vehicle (200) by means of front axle service brake actuators (228a, 228b) and/or rear axle service brake actuators (232a, 232b, 232c, 232d).

22. Vehicle (200), in particular a commercial vehicle (202) comprising a front axle (VA), at least one first rear axle (HA1), and an electronically controllable pneumatic brake system (204) according to any of claims 14 to 19, which is preferably designed to carry out a method according to any of claims 20 to 21.

## Revendications

1. Unité structurale électropneumatique (1) pour un système de frein pneumatique à commande électronique (204) d'un véhicule (200), en particulier d'un véhicule utilitaire (202), comportant
un raccord de réserve (4) pour la réception d'une pression de réserve (pV) d'au moins une première réserve d'air sous pression (6) ;
au moins un premier raccord de pression de frein à redondance (8) pour la fourniture d'une première pression de frein à redondance (pR1) pour un premier essieu (A1) du véhicule (200) et/ou pour une remorque du véhicule (200), **caractérisée par**
un raccord d'alimentation en cas de défaillance (10) pour la fourniture d'une pression d'alimentation en cas de défaillance (pAV) qui est limitée par rapport à la pression de réserve (pV) et inférieure à celle-ci, et
un agencement de soupape de sécurité en cas de défaillance (14) raccordé au raccord d'alimentation en cas de défaillance (10) et au raccord de pression de frein à redondance (8) ou à au moins un premier raccord de commande à redondance (40.4), lequel agencement de soupape de sécurité en cas de défaillance présente au moins une première soupape de frein en cas de défaillance (16) réalisée sous forme de soupape monostable, laquelle première soupape de frein en cas de défaillance peut être commutée en cas de défaillance afin de commander, sur la base de la pression d'alimentation en cas de défaillance (pAV), la première pression de frein à redondance (pR1) au niveau du premier raccord de pression de frein à redondance (8), ou au moins une première pression de commande à redondance (pRS1) au niveau du premier raccord de commande à redondance (40.4).

2. Unité structurale électropneumatique (1) selon la revendication 1, dans laquelle la pression d'alimentation en cas de défaillance (pAV) provient de la première réserve d'air sous pression (6), d'une réserve d'air sous pression supplémentaire (7) ou d'un cylindre de frein à accumulateur de ressort (242a, 242b, 242c, 242d).

3. Unité structurale électropneumatique (1) selon l'une des revendications précédentes, dans laquelle la première soupape de frein en cas de défaillance (16) est une soupape à 3/2 voies comportant un premier raccord de soupape de frein en cas de défaillance (16.1) recevant la pression d'alimentation en cas de défaillance (pAV), un deuxième raccord de soupape de frein en cas de défaillance (16.2) contrôlant la première pression de frein à redondance (pR1) ou la première pression de commande à redondance (pRS1) et un troisième raccord de soupape de frein en cas de défaillance (16.3) raccordé à une évacuation d'air (3), dans laquelle, dans une position de commutation non activée, le premier raccord de soupape de frein en cas de défaillance (16.1) est raccordé au deuxième raccord de soupape de frein en cas de défaillance (16.2) et, dans une position de commutation activée, le deuxième raccord de soupape de frein en cas de défaillance (16.2) est raccordé au troisième raccord de soupape de frein en cas de défaillance (16.3).

4. Unité structurale électropneumatique (1) selon l'une des revendications précédentes, dans laquelle un limiteur de pression (12) est monté en amont du raccord d'alimentation en cas de défaillance (10) ou l'unité structurale électropneumatique (2) présente un limiteur de pression (12) pour la limitation de la pression reçue au niveau du raccord d'alimentation en cas de défaillance (10).

5. Unité structurale électropneumatique (1) selon l'une des revendications précédentes, dans laquelle l'agencement de soupape de sécurité en cas de défaillance (14) présente une soupape bistable (26) électromagnétique commutée pneumatiquement en série avec la première soupape de frein en cas de défaillance (16).

6. Unité structurale électropneumatique (1) selon la revendication 5, dans laquelle la soupape bistable (26) présente un premier raccord de soupape bistable (26.1) recevant la pression d'alimentation en cas de défaillance (pAV), un deuxième raccord de soupape bistable (26.2) raccordé à la première soupape de frein en cas de défaillance (16) et un troisième raccord de soupape bistable (26.3) raccordé à l'évacuation d'air (3).

7. Unité structurale électropneumatique (1) selon l'une des revendications précédentes, présentant un agencement de soupape de travail (15) qui est raccordé au raccord de réserve (4) et reçoit de celui-ci la pression de réserve (pV) et peut être commuté par celui-ci, afin de commander la première pression de frein à redondance (pR1) au niveau du premier raccord de pression de frein à redondance (8) ou afin de commander une pression de travail (pA) au niveau d'un raccord de travail (16) de l'unité structurale électropneumatique (1), et présentant une unité de commande électronique (302) pour la commande de l'agencement de soupape de travail (14).

8. Unité structurale électropneumatique (1) selon la revendication 7, dans laquelle l'unité de commande électronique (302) commande la première soupape de frein en cas de défaillance (16).

9. Unité structurale électropneumatique (1) selon les revendications 6 et 7, dans laquelle l'unité de commande électronique (302) commande la soupape bistable (26).

10. Unité structurale électropneumatique (1) selon l'une des revendications précédentes, dans laquelle l'agencement de soupape de sécurité en cas de défaillance (14) présente une seconde soupape de frein en cas de défaillance (18) réalisée sous forme de soupape monostable, laquelle seconde soupape de frein en cas de défaillance est commutée pneumatiquement en série avec la première soupape de frein en cas de défaillance (16)

11. Unité structurale électropneumatique (1) selon la revendication 10, dans laquelle la seconde soupape de frein en cas de défaillance (18) est commandée par une unité de commande électronique supplémentaire (300).

12. Unité structurale électropneumatique (1) selon la revendication 7, dans laquelle l'agencement de soupape de travail (15) présente au moins une première unité pilote (32) électromagnétique et une première unité de soupape principale (34), dans laquelle la première unité pilote (32) est raccordée au raccord de réserve (4) et, en fonction de premiers signaux de commutation pilote (S4, S5) de l'unité de commande électronique (302), commande une première pression de commande de travail (pS1) au niveau de la première unité de soupape principale (34), dans laquelle la première unité de soupape principale (34) est raccordée au raccord de réserve (4) et, en fonction de la première pression de commande de travail (pS1) reçue, commande une première pression de frein de travail (pA1).

13. Unité structurale électropneumatique (1) selon la revendication 12, dans laquelle l'agencement de soupape de travail (15) présente une seconde unité pilote (44) électromagnétique et une seconde unité de soupape principale (45), dans laquelle la seconde unité pilote (44) est raccordée au raccord de réserve (4) et, en fonction de seconds signaux de commutation pilote (S6, S7) de l'unité de commande électronique (302), commande une seconde pression de commande de travail (pS2) au niveau de la seconde unité de soupape principale (45), dans laquelle la seconde unité de soupape principale (45) est raccordée au raccord de réserve (4) et, en fonction de la seconde pression de commande de travail (pS2) reçue, commande une seconde pression de frein de travail (pA2).

14. Système de frein pneumatique à commande électronique (204) pour un véhicule (200), en particulier un véhicule utilitaire (202), comportant
un modulateur d'essieu avant (220) pour la fourniture d'une pression de frein de service d'essieu avant (pBVA) à un premier actionneur de frein de service d'essieu avant (228a) et à un second actionneur de frein de service d'essieu avant (228a) sur un essieu avant (VA) du véhicule (200) ; et
un modulateur d'essieu arrière (230) pour la fourniture d'une pression de frein de service d'essieu arrière (pBHA) à au moins un premier actionneur de frein de service d'essieu arrière (232a) et à un second actionneur de frein de service d'essieu arrière (232b) sur un essieu arrière (HA1) du véhicule (200) ; et
un unité structurale électropneumatique (1) selon l'une des revendications 1 à 13, dans lequel le premier raccord de pression de frein à redondance (8) est raccordé à un raccord à redondance d'essieu avant (256) du modulateur d'essieu avant (220) et/ou à un raccord à redondance d'essieu arrière (258) du modulateur d'essieu arrière (230) afin de provoquer une commande redondante de la pression de frein de service d'essieu avant (pBVA) et/ou de la pression de frein de service d'essieu arrière (pBHA).

15. Système de frein pneumatique à commande électronique (204) selon la revendication 14, présentant une unité de commande centrale (400) qui fournit des signaux de frein d'essieu avant (SBV) au modulateur d'essieu avant (220) afin de provoquer une commande électronique de la pression de frein de service d'essieu avant (pBVA), et qui fournit des signaux de frein d'essieu arrière (SBH) au modulateur d'essieu arrière (230) afin de provoquer une commande électronique de la pression de frein de service d'essieu arrière (pBHA), dans lequel l'unité de commande centrale (400) commande la première soupape de frein en cas de défaillance (16).

16. Système de frein pneumatique à commande électronique (204) selon la revendication 14 ou 15, dans lequel l'unité structurale électropneumatique (1) est un module de frein secondaire (402) du système de frein pneumatique à commande électronique (204) et est réalisée pour provoquer, dans le cas où l'unité de commande centrale (400) est empêchée de commander électroniquement la pression de service de frein d'essieu avant (pBVA) et/ou la pression de service de frein d'essieu arrière (pBHA), une commande redondante de la pression de service de frein d'essieu avant (pBVA) et/ou de la pression de service de frein d'essieu arrière (pBHA).

17. Système de frein pneumatique à commande électronique (204) selon l'une des revendications 14 à 16, présentant une unité de frein de stationnement (240) pour la fourniture d'une pression de frein de stationnement (pBP) à un premier cylindre de frein à accumulateur de ressort (242a) et à un second cylindre de frein à accumulateur de ressort (242b) sur l'essieu arrière (HA1) du véhicule (200), dans lequel le raccord d'alimentation en cas de défaillance (10) est raccordé au premier cylindre de frein à accumulateur de ressort (242a) et/ou au second cylindre de frein à accumulateur de ressort (242b) afin de recevoir la pression de frein de stationnement (pBP) ou une pression déduite de celle-ci en tant que pression d'alimentation en cas de défaillance (pAV).

18. Système de frein pneumatique à commande électronique (204) selon la revendication 17, dans lequel l'unité structurale électropneumatique (1) est intégrée avec l'unité de frein de stationnement (240) pour former une unité structurale.

19. Système de frein pneumatique à commande électronique (204) selon l'une des revendications 14 à 18, présentant une unité de commande de remorque (250) pour la fourniture d'une pression de frein de remorque (pBT) à un raccord de pression de frein de remorque (251), dans lequel le premier raccord de pression de frein à redondance (8) ou un raccord de pression de frein à redondance supplémentaire (9) de l'unité structurale électropneumatique (1) est raccordé à un raccord à redondance de remorque (253) de la soupape de commande de remorque (250) afin de provoquer une commande redondante de la pression de frein de remorque (pBT).

20. Procédé pour la commande d'un système de frein pneumatique à commande électronique (204) selon l'une des revendications 14 à 19, comprenant les étapes consistant à :
- fournir une pression de réserve (pV) à un raccord de réserve (4) d'une unité structurale électropneumatique (1) ;
- fournir une pression d'alimentation en cas de défaillance (pAV), laquelle est limitée par rapport à la pression de réserve (pV) et inférieure à celle-ci, à un raccord d'alimentation en cas de défaillance (10) de l'unité structurale électropneumatique (1), au moins pendant la conduite du véhicule (200) ; et
- bloquer la pression d'alimentation en cas de défaillance (pAV) en l'absence de défaut du système de frein pneumatique à commande électronique (200).

21. Procédé selon la revendication 20, comprenant les étapes consistant à :
en cas d'une défaillance (FM, FD, FS, FA) du système de frein à commande électronique (204) :
- mettre hors tension une première soupape de frein en cas de défaillance (16) de l'unité structurale électropneumatique (1) ; et
- commander la pression d'alimentation en cas de défaillance (pAV) par la première soupape de frein en cas de défaillance (16) pour le déclenchement d'un freinage redondant du véhicule (200) au moyen d'actionneurs de frein de service d'essieu avant (228a, 228b) et/ou d'actionneurs de frein de service d'essieu arrière (232a, 232b, 232c, 232d).

22. Véhicule (200), en particulier véhicule utilitaire (202), comportant un essieu avant (VA), au moins un premier essieu arrière (HA1) et un système de frein pneumatique à commande électronique (204) selon l'une des revendications 14 à 19 qui est de préférence réalisé pour mettre en œuvre un procédé selon l'une des revendications 20 à 21.
